# EUROPÄISCHE PATENTSCHRIFT

(11) **EP 4 176 506 B1**
(45) Veröffentlichungstag und Bekanntmachung des Hinweises auf die Patenterteilung: **19.06.2024**
(21) Anmeldenummer: 21740460.7
(22) Anmeldetag: 01.07.2021
(51) Int. Cl.: H02J 7/00, H02J 7/04

(54) **KOMPAKTE LEISTUNGSLADEEINRICHTUNG**
COMPACT POWER CHARGING DEVICE
DISPOSITIF DE CHARGE ÉLECTRIQUE COMPACT

(30) Priorität: 01.07.2020 DE 102020117379
(43) Veröffentlichungstag der Anmeldung: 10.05.2023
(73) Patentinhaber: ONgineer GmbH, 32339 Espelkamp (DE)
(72) Erfinder: BREDEMEIER, Peter, 32361 Preußisch Oldendorf (DE); HONERKAMP, Stefan, 49152 Bad Essen (DE); MÜNDEL, Claus-martin, 32369 Rahden (DE)
(74) Vertreter: Lippert Stachow Patentanwälte Rechtsanwälte
(86) Internationale Anmeldenummer: PCT/EP2021/068198
(87) Internationale Veröffentlichungsnummer: WO 2022/003110

(56) Entgegenhaltungen:
- US-A- 5 283 511
- US-A1- 2014 239 881
- Anonymous: "Amazon.com: Belker 90W Universal Laptop Charger", , 27. Juli 2015 (2015-07-27), Seiten 1-11, XP055845790, Gefunden im Internet: URL:https://www.amazon.com/dp/B014RDL6U8/r ef=sspa_dk_detail_4?psc=1&pd_rd_i=B014RDL6 U8&pd_rd_w=B6aiN&pf_rd_p=54ed5474-54a8-4c7 f-a88a-45f748d18166&pd_rd_wg=7pXww&pf_rd_r =YYBAMZA0GH0KATDE5YY6&pd_rd_r=7a9ab759-ead 4-42c9-8c7e-e071aa6be6a7&spLa=ZW5jcnlwdGVk UXVhbGlmaWVyPUEySjhVRTJHTUhJSFlQJmVuY3J5cH RlZElkPUEw [gefunden am 2021-09-29]
- I-Tec: "i-tec Ultra Slim Power Adapter 90W i-tec Ultra Slim Power Adapter 90W 1x USB port with 11 connectors for laptops Acer Asus Compaq Dell HP IBM Lenovo Sony Toshiba Fujitsu", , 26. Juli 2018 (2018-07-26), XP055845865, Gefunden im Internet: URL:https://i-tec.pro/wp-content/uploads/d atasheety/SLPA90W_en.pdf

## Beschreibung

Die Erfindung betrifft ein Ladegerät für eine Ladeeinrichtung zum Laden einer Batterie gemäß dem Oberbegriff von Anspruch 1 sowie ein entsprechendes Ladeverfahren.

Ladeeinrichtungen zum Laden einer Batterie haben wegen der Vielzahl an mobilen elektronischen Geräten, die in unterschiedlichsten alltäglichen Einsatzbereichen verwendet werden, eine enorme Bedeutung erhalten. Die Vielfalt solcher batteriebetriebenen mobilen elektronischen Geräte ist groß und umfasst beispielsweise Kopfhörer, Smartphones, Laptops und E-Bikes, d. h. durch einen Elektromotor unterstützt angetriebene Fahrräder. Je nach Energieverbrauch des jeweiligen mobilen elektronischen Geräts werden Batterien unterschiedlicher Kapazitäten und unterschiedlichen Nennungsspannungen eingesetzt. Um Batterien mit großen Kapazitäten innerhalb von vertretbarer Zeit laden zu können, müssen Ladeeinrichtungen verwendet werden, die eine hinreichende Ladeleistung bereitstellen können. Die vorliegende Erfindung bezieht sich auf die Gattung an Ladeeinrichtungen, die eine Ladeleistung von mindestens 80 W, insbesondere mindestens 100 W bereitstellen können und einen Ladenstrom von mindestens 2 A, insbesondere mindestens 3 A bereitstellen können. Übliche Anforderungen an solche Ladeeinrichtungen sind, dass solche Ladeeinrichtungen zum schonenden Laden einer Batterie geeignet sind, hinreichend robust aufgebaut sind und möglichst gut durch einen Benutzer handhabbar sind. Hierzu weisen gattungsgemäße Ladeeinrichtungen ein Ladegerät mit einem Gehäuse auf, an dem ein Versorgungsanschluss und ein Ladeanschluss vorgesehen ist. Das Gehäuse ist üblicherweise starr und umschließt und schützt einen Innenraum, in dem die elektronischen Komponenten des Ladegeräts angeordnet sind. Über den Versorgungsanschluss kann die Ladeeinrichtung über eine externe elektrische Stromversorgung mit elektrischer Energie versorgt werden. Über den Ladeanschluss kann die Ladeeinrichtung elektrische Ladeenergie mit Ladeparametern ausgeben. Die Ladeparameter bestimmen die Art und Weise, wie die elektrische Ladeenergie ausgegeben wird. Beispielsweise können Ladestrom und/oder Ladespannung als Ladeparameter während des Ausgebens der elektrischen Energie festgelegt sein, insbesondere in ihrem zeitabhängigen Verhalten, insbesondere in ihrem voneinander abhängigen Verhalten. Zusätzlich zu dem Ladegerät umfasst eine gattungsgemäße Ladeeinrichtung üblicherweise ein Ladekabel zum Verbinden des Ladegeräts mit einer Batterie sowie ein Versorgungskabel zum Verbinden des Ladegeräts mit einem externen elektrischen Versorgungsnetz. Hierzu weist das Versorgungskabel an einem seiner Enden üblicherweise einen genormten Stecker zum Einstecken in eine übliche Steckdose auf und ist an seinem anderen Ende in einem bestimmungsgemäßen Betriebszustand mit dem Ladegerät verbunden. Der Versorgungsanschluss und der Ladeanschluss können jeweils beispielsweise als Buchse ausgebildet sein, in die ein korrespondierender Stecker eines Versorgungskabels bzw. Ladekabels zur Realisierung des bestimmungsgemäßen Betriebszustands der Ladeeinrichtung, in dem sie zum Laden einer Batterie eingerichtet ist bzw. diese lädt, eingesteckt werden kann. Alternativ kann der Versorgungsanschluss bzw. der Ladeanschluss beispielsweise Klemmkontakte aufweisen, mit denen das Ladekabel bzw.

Versorgungskabel im Betriebszustand und somit verbunden sind, und die nur durch Öffnen des Gehäuses lösbar sind. Versorgungsanschluss und Ladeanschluss können sich allgemein abschnittsweise im von dem Gehäuse umschlossenen Innenraum erstrecken und mit einem entsprechenden Versorgungskabel bzw. Ladekabel elektrisch leitend verbunden sein. Das Gehäuse dient einem mechanischen Schutz der elektronischen Komponenten. Beispielsweise sind Gehäuse aus Kunststoff oder Metall bekannt. In dem Gehäuse sind als elektronische Komponenten des Ladegeräts zumindest ein Speicher, eine elektronische Steuereinrichtung und eine Kommunikationsschnittstelle vorgesehen. In dem Speicher ist ein Ladeprofil abgelegt oder ablegbar, das zumindest für einen der Ladeparameter einen Wert definiert, beispielsweise einen absoluten Wert oder einen zeitabhängigen Wert. Das Ladeprofil kann beispielsweise einen Abschaltungszeitpunkt vorgeben, der beispielsweise durch das Erreichen einer bestimmten Ladespannung oder Batteriespannung, d. h. eines vorgegebenen maximalen Ladewerts der zu ladenden Batterie definiert ist, wobei ab dem Erreichen des Abschaltungszeitpunkts keine weitere Ladeenergie mehr an dem Ladeanschluss ausgegeben wird. Beispielsweise kann das Ladeprofil vorgeben, dass bei Erreichen der maximalen Batteriespannung bzw. des maximalen Ladewerts lediglich eine Erhaltungsladungsspannung an dem Ladeanschluss ausgegeben wird. Das Ladeprofil kann durch Festlegen der insbesondere zeitabhängigen Werte von zumindest einem der Ladeparameter auch definieren, ob eine Batterie schnell oder langsam geladen wird. Die elektronische Steuereinrichtung ist zur Festlegung von zumindest einem der Ladeparameter ausgebildet. Dies bedeutet, dass die Steuereinrichtung den Ladeparameter in Abhängigkeit von dem gespeicherten Ladeprofil festlegen kann, so dass die Steuereinrichtung sicherstellen kann, dass an dem Ladeanschluss Ladeenergie mit dem durch das Ladeprofil vorgegebenen Ladeparameter abgegeben wird. Die Kommunikationsschnittstelle ist zur drahtlosen Kommunikation ausgebildet und dazu geeignet, von einem externen mobilen Gerät, beispielsweise einem Smartphone, Informationen zu erhalten, beispielsweise Informationen betreffend ein Ladeprofil, insbesondere ein Ladeprofil als solches.

Durch das Vorsehen einer Kommunikationsschnittstelle, eines Speichers und einer elektronischen Steuereinrichtung sind gattungsgemäße Ladeeinrichtungen dazu geeignet, ein benutzerbedürfnisspezifisches Laden einer Batterie zu ermöglichen. Denn über die Kommunikationsschnittstelle kann der Benutzer Einfluss auf zumindest einen Ladeparameter nehmen, und die Steuereinrichtung gewährleistet die Einhaltung des gewünschten Ladeprofils bzw. des gewünschten Ladeparameters. Durch das Ausgeben einer hinreichend großen Ladeleistung ermöglichen gattungsgemäße Ladeeinrichtungen darüber hinaus ein ausreichend schnelles Laden von Batterien auch größerer Kapazitäten. Ferner gewährleistet das Gehäuse einen hinreichenden Schutz der elektronischen Komponenten des Ladegeräts. Allerdings sind gattungsgemäße Ladeeinrichtungen für einen Benutzer zumeist unpraktisch handhabbar. Um eine hinreichende Ladeleistung mit herkömmlichen, kostengünstigen elektronischen Komponenten gewährleisten zu können, müssen gattungsgemäße Ladeeinrichtungen Mindestdimensionierungen aufweisen, die einen mobilen Transport der Ladeeinrichtung erschweren. Ein mobiler Transport der Ladeeinrichtung ist jedoch in vielen Fällen zwingend erforderlich, da üblicherweise mobile elektronische Geräte wegen des hohen Energiebedarfs bei geeigneten Gelegenheiten so oft wie möglich geladen werden müssen, damit sie dann, wenn keine externe Stromversorgung zur Verfügung steht, hinreichend lange funktionieren. Im Stand der Technik ist wegen der verwendeten elektronischen Komponenten das Vorsehen einer gewissen Mindestgröße des Ladegeräts der Ladeeinrichtung zwingend erforderlich. Ferner müssen bei höheren Ladeleistungen typischerweise Lüfter vorgesehen werden, die zum einen eine weitere Vergrößerung der Dimensionen des Ladegeräts mit sich bringen, zum anderen beim Laden unangenehme Geräusche entwickeln und darüber hinaus störanfällig sind, insbesondere bei ruckartigen Kraftbelastungen auf das Lagegerät. Besonders erschwerend kommt hinzu, dass üblicherweise gattungsgemäße Ladeeinrichtungen nur für einen sehr begrenzten Ladeleistungsbereich und/oder Ladespannungsbereich verwendet werden können. Ein Benutzer ist somit darüber hinaus darauf angewiesen, mehrere der zumeist großvolumigen Ladeeinrichtungen mit sich zu führen. Außerdem gestaltet sich zumeist die drahtlose Kopplung eines mobilen Endgeräts, wie beispielsweise eines Smartphone, mit der Kommunikationsschnittstelle des Ladegeräts schwierig, da ein Benutzer zunächst die korrekte Ausrichtung seines Smartphones relativ zu dem Ladegerät feststellen muss, bevor eine Kopplung der Kommunikationsschnittstellen miteinander erfolgt und er dann erfolgreich Einfluss auf zumindest einen Ladeparameter nehmen kann.

Der vorliegenden Erfindung liegt die Aufgabe zugrunde, ein Ladegerät für eine Ladeeinrichtung bereitzustellen, das zumindest einen Nachteil gattungsgemäßer Ladeeinrichtungen zumindest teilweise behebt und/oder ein Verfahren bereitzustellen, mit dem zumindest ein Nachteil gattungsgemäßer Ladeverfahren zumindest teilweise behoben werden kann.

Als eine Lösung der genannten, der vorliegenden Erfindung zugrundeliegenden Aufgabe schlägt die Erfindung ein Ladegerät mit den Merkmalen von Anspruch 1 vor.

Das erfindungsgemäße Ladegerät wird bestimmungsgemäß als Ladegerät einer Ladeeinrichtung verwendet, die dazu geeignet ist, in einem bestimmungsgemäßen Betriebszustand, in dem sie über ihren Versorgungsanschluss an einem externen Versorgungsnetz, bevorzugt mit einer Versorgungsspannung von zwischen 100 V und 240 V, insbesondere 220 V bis 240 V, angeschlossen ist, eine Batterie mit einer Ladeleistung von mindestens 80 W, insbesondere mindestens 100 W, und einem Ladestrom von mindestens 2 A, insbesondere mindestens 3 A, zu laden. Die Ladeeinrichtung umfasst das erfindungsgemäße Ladegerät, das ein Gehäuse umfasst, an dem ein Versorgungsanschluss und eine Ladeanschluss zum Ausgeben einer elektrischen Ladeenergie vorgesehen ist. In dem Gehäuse sind ein bevorzugt nicht-flüchtiger Speicher, eine elektronische Steuereinrichtung und eine Kommunikationsschnittstelle vorgesehen. Die Steuereinrichtung ist dazu ausgebildet, zumindest einen Ladeparameter festzulegen, mit dem in dem Betriebszustand das Ladegerät an seinem Ladeanschluss die elektrische Ladeenergie ausgibt. Als von der Steuereinrichtung festgelegter Ladeparameter kann beispielsweise der Ladestrom und/oder die Ladespannung und/oder die Ladeleistung und/oder eine Ladedauer vorgesehen sein. Die Kommunikationsschnittstelle ist eine zur drahtlosen Kommunikation ausgebildete Kommunikationsschnittstelle, insbesondere eine NFC-Schnittstelle. Die Kommunikationsschnittstelle ist dergestalt an den Speicher angeschlossen, dass über die Kommunikationsschnittstelle in den Speicher ein Ladeprofil ablegbar ist. Die Steuereinrichtung ist dergestalt mit dem Speicher verbunden, dass sie eine Festlegung von zumindest einem der Ladeparameter in Abhängigkeit von dem in dem Speicher abgelegten Ladeprofil gewährleistet. Das Ladeprofil definiert dabei zumindest für einen der Ladeparameter einen Wert. Dieser Wert kann beispielsweise auch zeitabhängig sein. Die Definition des Werts kann beispielsweise auch über eine Funktion erfolgen, in der beispielsweise als weiterer Parameter die Zeit und/oder ein Maximalwert für Ladestrom und/oder Ladespannung und/oder Ladeleistung enthalten ist. Beispielsweise kann die Steuereinrichtung mit dem Ladeanschluss dergestalt verbunden sein, dass die Steuereinrichtung über den Ladeanschluss einen einen Ladezustand einer in dem Betriebszustand an dem Ladeanschluss angeschlossenen Batterie definierenden Ladewert ermitteln kann, wobei das Ladeprofil beispielsweise zumindest einen der Ladeparameter in Abhängigkeit von dem ermittelten Ladewert festlegt. So kann beispielsweise das Ladeprofil definieren, ab welchem Ladezustand von einer Aufladungsphase in eine Erhaltungsladungsphase übergegangen wird, wobei zumindest einer der Ladeparameter in der Aufladungsphase auf einen anderen Wert festgelegt wird als in der Erhaltungsladungsphase. Die in dem Ladeprofil angegebene funktionale Abhängigkeit von weiteren Parametern kann beispielsweise auch darin bestehen, dass als ein weiterer Parameter die nominelle Nennspannung der im Betriebszustand angeschlossenen Batterie in der Funktion enthalten ist. An dieser Stelle sei darauf hingewiesen, dass üblicherweise eine Batterie über ihre nominelle Nennspannung definierbar ist. So bestehen beispielsweise Einordnungen von Batterien in ein 48-Volt-System und 12-Volt-System, wie es dem Fachmann absolut geläufig ist. Grundsätzlich ergibt sich die nominelle Nennspannung eines Batteriesystems üblicherweise aus einem auf den jeweiligen Systemwert "gerundeten" Wert des Ergebnisses, das sich aus einer Multiplikation von 3,6-3,7 V (je nach eingesetztem Akkumulatorblock) mit der Anzahl an Akkumulatorblöcken, die in der Batterie vorgesehen und deren Spannung in der Batterie hintereinander geschaltet sind, ergibt. So werden üblicherweise 10 solcher Akkumulatorblöcke zur Realisierung eines 36-Volt-Batteriesystems hintereinander geschaltet und 13 ("Spar-Akku") oder 14 solcher Akkumulatorblöcke zur Realisierung eines 48-Volt-Batteriesystems hintereinander geschaltet. Je nach vorgesehenem Batteriesystem, d. h. nach nomineller Nennspannung der im Betriebszustand angeschlossenen Batterie, ist das Laden der Batterie mit unterschiedlichen Ladeparametern erforderlich. Entsprechend kann eine von der Batterie erhaltene Information als ein Parameter in der das Ladeprofil definierenden Funktion enthalten sein, über die zumindest einer der Ladeparameter durch die Steuereinrichtung festgelegt wird. Zur Lösung zumindest einer der Erfindung zugrundeliegenden Aufgaben schlägt die Erfindung eine Ausführungsform vor, bei der das Gehäuse eine Länge von höchstens 20 cm, insbesondere höchstens 17 cm, insbesondere höchstens 16 cm aufweist, und eine Höhe von weniger als 40 mm, insbesondere weniger als 38 mm, insbesondere weniger als 35 mm aufweist. Dabei ist bevorzugt vorgesehen, dass die Länge des Gehäuses zwischen dem 1,5-Fachen und dem 2,7-Fachen, insbesondere zwischen dem 1,7-Fachen und dem 2,5-Fachen einer Breite des Gehäuses beträgt. Zusätzlich oder ergänzend ist bevorzugt das Gehäuse so ausgebildet, dass das Produkt aus seiner Länge mal seiner Breite, das sich somit aus der Multiplikation seiner Länge mit seiner Breite ergibt, ein Wert von weniger als 250 cm², insbesondere weniger als 200 cm², insbesondere weniger als 150 cm² ist. An dieser Stelle sei darauf hingewiesen, dass die Länge des Gehäuses die Erstreckungslänge des Gehäuses entlang einer Längsrichtung ist, die Höhe des Gehäuses die Erstreckungslänge des Gehäuses entlang einer Vertikalrichtung ist und die Breite des Gehäuses die Erstreckungslänge des Gehäuses entlang einer Transversalrichtung ist, wobei Längsrichtung, Vertikalrichtung und Transversalrichtung aufeinander senkrecht stehen. Die Länge ist dabei bevorzugt über die Erstreckungslänge in Längsrichtung definiert, innerhalb derer sich das Gehäuse durchgehend über mindestens 75 % seiner maximalen Breite und seiner maximalen Höhe erstreckt, die Breite über die Erstreckungslänge in Transversalrichtung, innerhalb derer es sich durchgehend über mindestens 75 % seiner maximalen Länge und maximalen Höhe erstreckt und die Höhe über die Erstreckungslänge in Vertikalrichtung, innerhalb derer es sich durchgehend über mindestens 75 % seiner maximalen Länge und Breite erstreckt. Länge, Höhe und Breite können auch über die jeweiligen Maximalerstreckungen des Gehäuses in der jeweiligen Richtung definiert sein. Bevorzugt beträgt die Querschnittsfläche des Gehäuses senkrecht zur Vertikalrichtung über die gesamte Höhe des Gehäuses hinweg stets weniger als 250 cm², insbesondere weniger als 200 cm², insbesondere weniger als 150 cm². Besonders bevorzugt umschließt das Gehäuse einen Innenraum, der eine Höhe von weniger als 35 mm, insbesondere weniger als 33 mm, insbesondere weniger als 30 mm aufweist. Besonders bevorzugt weisen sämtliche elektronische Komponenten, die in dem Gehäuse angeordnet sind, jeweils eine Höhe von weniger als 25 mm auf. Eine elektronische Komponente ist dabei als ein in sich zusammenhängendes, nicht zerstörungsfrei zerlegbares Bauteil anzusehen. Besonders bevorzugt weist das Gehäuse mit sämtlichen in ihm vorgesehenen Komponenten und somit sämtlichen Komponenten, die in dem von dem Gehäuse eingeschlossenen Innenraum angeordnet sind und/oder in dem Gehäuse integriert sind, ein Gewicht von weniger als 500 g auf. Dabei ist festzuhalten, dass Versorgungsanschluss und Ladeanschluss jeweils ein Ende des Gehäuses ausbilden, so dass ein gegebenenfalls vorgesehenes Ladekabel und Versorgungskabel nicht in dem Gehäuse integriert sind, selbst wenn sie nur durch Öffnen des Gehäuses von elektronischen Komponenten des Gehäuses trennbar sind. Durch das Vorsehen eines Gehäuses mit den beschriebenen geringen Abmessungen und durch eine Ausgestaltung des Ladegeräts dergestalt, dass das Gehäuse mit sämtlichen in ihm vorgesehenen Komponenten ein Gewicht von weniger als 500 g aufweist, geht die Erfindung einen im Vergleich zum Stand der Technik grundsätzlich anderen Weg. Im Stand der Technik werden üblicherweise in dem Gehäuse großvolumige Komponenten verbaut, damit das Ladegerät kostengünstig realisierbar ist und von den elektrischen Komponenten eine hinreichende Wärmeabfuhr gewährleistet ist. Üblicherweise ist darüber hinaus, da gattungsgemäße Ladeeinrichtungen, auf die sich die vorliegende Erfindung bezieht, zum Ausgeben einer hohen Ladeleistung von mindestens 80 W geeignet sind, eine aktive Luftzirkulation in dem Gehäuse vorgesehen, d. h. ein Bauteil, das im Betriebszustand der Ladeeinrichtung mit elektrischer Energie versorgt wird und dazu ausgebildet ist, direkt eine Luftzirkulation herbeizuführen. Ein solches Bauteil kann beispielsweise als Propellerlüfter oder als Düsenlüfter ausgestaltet sein. Gattungsgemäße Ladeeinrichtungen beruhen somit auf dem Konzept, ein Gehäuse mit einem großen Volumen vorzusehen, um in dem Gehäuse eine Wärmeabfuhr von den elektronischen Komponenten des Ladegeräts zu gewährleisten. Die Erfindung geht einen grundsätzlich anderen Weg. Gemäß der Erfindung wird ein möglichst kleines Gehäuse vorgesehen, in dem zwar nur wenig Luftvolumen verfügbar ist, über das eine Wärmeabfuhr von den elektronischen Komponenten gewährleistet werden kann, doch geht die Erfindung davon aus, durch gezielte Auswahl an hochwertigen elektrischen Komponenten und der optimierten Ausgestaltung von elektrischen Schaltkreisen eine Minimierung des benötigten Volumens des von dem Gehäuse umschlossenen Innenraums zu erzielen. Entsprechend ist die Erfindung gezielt drauf ausgerichtet, das Gesamtgewicht von Gehäuse und elektronischen Komponenten auf ein Gewicht von unter 500 g zu reduzieren. Eine besondere Rolle spielt dabei die Auswahl des Formfaktors, nämlich das Vorsehen einer Länge des Gehäuses, die zwischen dem 1,5-Fachen und dem 2,7-Fachen, insbesondere dem 1,7-Fachen und dem 2,5-Fachen der Breite des Gehäuses beträgt. Dieser Formfaktor hat sich als besonders günstig herausgestellt, um zum einen eine gezielte Platzierung von geeigneten elektronischen Komponenten in dem Gehäuse zu ermöglichen und diese geeignet zu verschalten und zum anderen eine drahtlose Kommunikationsschnittstelle, insbesondere eine NFC-Kommunikationsschnittstelle bereitzustellen, an die ein externes Mobilgerät, insbesondere ein Smartphone, besonders einfach zuverlässig ankoppelbar ist, und darüber hinaus einen besonders einfachen und komfortablen Transport des Gehäuses, beispielsweise in einer Tasche, zu ermöglichen. Dabei hat sich erfindungsgemäß als besonders geeignet herausgestellt, den Formfaktor so auszuwählen, dass er zumindest an den Formfaktor üblicher Smartphones angenähert ist. Zum einen erleichtert dies die zielgerichtete Ausrichtung eines Smartphones, um eine möglichst gute Kopplung der Kommunikationsschnittstellen von Smartphone und Ladegerät zu ermöglichen. Zum anderen ist dieser Formfaktor für die Platzierung der elektronischen Komponenten, insbesondere umfassend den Speicher, die Steuereinrichtung und die Kommunikationsschnittstelle besonders vorteilhaft. Im Besonderen in Kombination mit dem genannten Formfaktor, aber auch unabhängig von diesem hat sich das Vorsehen einer kleinen Grundfläche, d.h. eines kleinen Produkts von Länge mal Breite des Gehäuses, für die Handhabbarkeit als besonders vorteilhaft herausgestellt. Die Erfinder haben überraschend festgestellt, dass auch bei einer entsprechend engen Packung von Komponenten in dem Gehäuse dennoch zumindest die Funktion gattungsgemäßer Ladeeinrichtungen erreicht werden kann, insbesondere im Kontext der vorliegend beschriebenen vorteilhaften Ausführungsformen besonders vorteilhafte Funktionen. Dabei haben die Erfinder festgestellt, dass es besonders vorteilhaft ist, das Gehäuse als Kunststoffgehäuse auszubilden und in dem Gehäuse ausschließlich eine passive Luftzirkulation, d. h. ein lüfterloses Gehäuse, vorzusehen. Im Gegensatz zu herkömmlichen Ladeeinrichtungen, bei denen das Ladegerät üblicherweise ein Gehäuse aufweist, das zumindest abschnittsweise aus einem Metall hergestellt ist, um eine möglichst gute Wärmeabfuhr über das Gehäuse selbst zu gewährleisten, geht die Erfindung einen anderen Weg und schlägt besonders bevorzugt vor, trotz der Eignung der Ladeeinrichtung zum Laden mit einer Batterie mit einer hohen Ladeleistung das Gehäuse aus einem Kunststoff herzustellen und keinen Lüfter in dem Gehäuse vorzusehen. Hierdurch ist zum einen eine robustere Ausgestaltung des Ladegeräts gewährleistet. Zum anderen können hierdurch die Herstellkosten reduziert werden. Der Erfindung liegt somit die besondere Erkenntnis zugrunde, dass durch Reduzierung der Herstellkosten durch Einsparung eines Lüfters eine Einsparnis erzielt werden kann, die an anderer Stelle als Investition in hochpreisigere Elektronikbauteile verwendet werden kann.

Allgemein ist bei gattungsgemäßen Ladeeinrichtungen üblicherweise ein Ladegerät vorgesehen, das eine Konverterschaltung mit einer Primärspule und einer Sekundärspule aufweist, wobei üblicherweise an der Sekundärseite ein Gleichrichter vorgesehen ist. Die Konverterschaltung dient dem Konvertieren der an dem Versorgungsanschluss des Ladegeräts in dem Betriebszustand anliegenden Versorgungsspannung in eine an dem Ladeanschluss vorgesehene Ladespannung. Der Gleichrichter dient der Realisierung einer Gleichspannung als Ladespannung, da üblicherweise zum Laden einer Batterie eine Gleichspannung benötigt wird. Die Erfinder haben festgestellt, dass eine bauraumoptimierte Ausgestaltung bzw. Anordnung von Elektronikbauteilen in dem Gehäuse dann besonders effektiv und verlustfrei ermöglicht ist, wenn in dem Ladegerät eine Konverterschaltung mit einer Primär- und einer Sekundärspule vorgesehen wird, die einen Spannungsteiler mit zwei parallelen Spannungsteilerarmen aufweist, wobei in der Konverterschaltung ein erstes aktives Schaltbauteil, das insbesondere als Transistor, insbesondere MOSFET, ausgebildet ist, vorgesehen ist und der Spannungsteiler mit seinen beiden parallelen Spannungsteilerarmen dem ersten aktiven Schaltbauteil nachgeschaltet ist und die Primärspule und in Reihe zu der Primärspule ein Speicherkondensartor in einem ersten der beiden Spannungsteilerarme vorgesehen ist und ein zweites aktives Schaltbauteil, das insbesondere als Transistor, insbesondere als MOSFET ausgebildet ist, in einem zweiten der Spannungsteilerarme vorgesehen ist, wobei die Steuereinrichtung zum Ansteuern der aktiven Schaltbauteile ausgebildet ist. Bevorzugt ist die Steuereinrichtung dazu ausgebildet, die aktiven Schaltbauteile mit einem Duty-Cycle und einer Arbeitsfrequenz anzusteuern. Der Duty-Cycle bestimmt dabei das Verhältnis zwischen der Zeitdauer, während derer das jeweilige aktive Schaltbauteil eingeschaltet ist und somit stromleitend ausgebildet ist, zu der Summe an Zeitdauern, die sich aus der Addition der Zeitdauer, während derer das jeweilige aktiven Schaltbauteil ausgeschaltet ist und somit stromsperrend ausgebildet ist, mit der Zeitdauer, während derer das jeweilige aktive Schaltbauteil eingeschaltet ist und somit stromleitend ausgebildet ist, ergibt. Die für die beiden Schaltbauteile vorgesehenen Duty-Cycle können in funktionaler Abhängigkeit zueinander stehen, beispielsweise identisch oder zueinander invertiert sein. Die Arbeitsfrequenz bezeichnet die Frequenz, mit der die Schaltbauteile geschaltet werden, wobei die Periodenlänge der Arbeitsfrequenz festgelegt ist durch die Zeitdauer zwischen zwei Einschaltvorgängen. Die Arbeitsfrequenz ist bevorzugt für beide Schaltbauteile identisch. Die Steuereinrichtung ist somit besonders bevorzugt so ausgestaltet, dass sie sowohl den Duty-Cycle als auch die Arbeitsfrequenz, mit der die Schaltbauteile geschaltet werden, in dem Betriebszustand festlegt. Besonders bevorzugt ist die Steuereinrichtung dazu ausgebildet, den Duty-Cycle zwischen einem Minimal-Duty-Cycle und einem Maximal-Duty-Cycle verändern zu können, wobei der Maximal-Duty-Cycle mindestens das Dreifache, insbesondere mindestens das Vierfache des Minimal-Duty-Cycle beträgt. Besonders bevorzugt ist die Steuereinrichtung dazu ausgebildet, durch Festlegen des Duty-Cycles die Ladespannung festzulegen und durch Festlegen der Arbeitsfrequenz den Ladestrom festzulegen. Als besonders vorteilhaft hat sich darüber hinaus herausgestellt, zwischen der Sekundärspule und dem Ladeanschluss einen Einweggleichrichter und somit keinen Zweiweggleichrichter vorzusehen, so dass somit nur jeweils über eine halbe Periodenlänge der von der Sekundärspule erzeugten Wechselspannung Energie von der Sekundärspule an den Ladeanschluss fließt. Das Vorsehen eines Einweggleichrichters hat sich als besonders vorteilhaft herausgestellt, um eine solche Rückkopplung des Sekundärkreises der Konverterschaltung mit dem Primärkreis der Konverterschaltung zu verhindern, die den resonanten Betrieb der Primärschaltung auf einen sehr geringen Duty-Cycle-Bereich beschränkt. Darüber hinaus ermöglicht das Vorsehen von nur einem Einweggleichrichter eine weitere Reduzierung der Herstellkosten. Dabei haben die Erfinder erkannt, dass mit dem beschriebenen besonders vorteilhaften Aufbau der Konverterschaltung des Ladegeräts hohe Stromflüsse in den Bauteilen, die zu einer zu hohen Wärmeentwicklung führen, vermieden werden können und Verluste reduziert werden können. Besonders bevorzugt ist die Steuereinrichtung dazu ausgebildet, den Duty-Cycle zu verändern, um die an dem Ladeanschluss ausgegebene Ladespannung zwischen einer Minimalspannung und einer Maximalspannung zu variieren bzw. an die in dem Betriebszustand an dem Ladeanschluss angeschlossene Batterie anzupassen. Die Anpassung der Ladespannung erfolgt bevorzugt, indem als Ladeparameter die Ladespannung vorgegeben wird, beispielsweise durch Auslesen der Batterie durch die Steuereinrichtung oder durch Vorgabe durch den Benutzer über die Kommunikationsschnittstelle. Besonders bevorzugt ist die Steuereinrichtung dazu ausgebildet, die Ladespannung zwischen einer Minimalspannung und einer Maximalspannung anzupassen, wobei die Maximalspannung mindestens das Dreifache, insbesondere mindestens das Vierfache der Minimalspannung beträgt. Entsprechend ist die Steuereinrichtung dazu ausgebildet, in dem Betriebszustand ein Laden der Batterie mit jeweils an die Batterie angepasste Ladespannung zu gewährleisten, wobei je nach Typ der Batterie die Ladespannung über einen außergewöhnlich weiten Ladespannungsbereich hinweg angepasst werden kann. Besonders bevorzugt ist die Steuereinrichtung ferner dazu ausgebildet, die Arbeitsfrequenz zur Regelung des Ladestroms zu verändern. Besonders bevorzugt ist die Steuereinrichtung dazu ausgebildet, die Arbeitsfrequenz und den Duty-Cycle unabhängig voneinander zu verändern, so dass für unterschiedliche Duty-Cycle jeweils die Arbeitsfrequenz in einem Arbeitsfrequenzbereich einstellbar ist, wobei der Arbeitsfrequenzbereich bevorzugt zumindest eine Minimalfrequenz und eine Maximalfrequenz umfasst, wobei die Maximalfrequenz mindestens das Doppelte, insbesondere das Dreifache, insbesondere mindestens das Vierfache der Minimalfrequenz beträgt. In der besonders vorteilhaften Ausführungsform ist die Ladeeinrichtung somit dazu geeignet, in einem weiten Ladespannungs- und Ladestrombereich gezielt Ladeparameter für das Laden einer im Betriebszustand angeschlossenen Batterie zu setzen. Dabei hat sich insbesondere die beschriebene Topologie der Konverterschaltung als vorteilhaft herausgestellt. Gegenüber herkömmlichen Konverterschaltungen, die beispielsweise auf dem Flyback-Prinzip oder dem LLC-Prinzip beruhen, weist die erfindungsgemäße Konverterschaltung wesentliche Vorteile auf, da bei einer Spannungskonvertierung über einen weiten Ladespannungsbereich hinweg jeweils eine resonante Energieübertragung zwischen Primärseite mit Primärspule und Sekundseite mit Sekundärspule erreicht werden kann und darüber hinaus eine einfache und kostengünstige Struktur der Konverterschaltung gewährleistet ist und Strompeaks verhindert bzw. reduziert werden können.

In einer Ausführungsform weist die Steuereinrichtung eine Codierschnittstelle auf, über die durch eine Codierung der Steuereinrichtung zumindest einer der Ladeparameter festlegbar ist. Die Festlegung des Ladeparameters kann beispielsweise absolut erfolgen, indem ein Absolutwert für den Ladeparameter festgelegt ist, oder beispielsweise auch in Abhängigkeit von dem Ladeprofil. Eine absolute Festlegung kann beispielsweise darin bestehen, dass für den Ladeparameter ein vorgegebener Wert festgelegt wird. Eine Festlegung in Abhängigkeit von dem Ladeprofil kann beispielsweise darin bestehen, dass ein Grenzwert festgelegt wird und somit in dem Fall, dass das Ladeprofil einen den Grenzwert übersteigenden Wert vorsieht, dieser Grenzwert anstelle des von dem Ladeprofil vorgesehenen Werts verwendet wird. Die Festlegung des Ladeparameters in Abhängigkeit von dem Ladeprofil kann beispielsweise auch darin bestehen, dass die Festlegung einen Skalierungsfaktor beinhaltet, über die der von dem Ladeprofil vorgegebene Wert skaliert wird. Dies kann beispielsweise vorteilhaft sein, um durch Festlegung des Ladeparameters das Ladeprofil auf ein bestimmtes Batteriesystem, beispielsweise 48 V-System oder 12 V-System, zu skalieren, davon unabhängig jedoch den zeitlichen Verlauf des Werts des Ladeparameters, der durch das Ladeprofil festgelegt wird, beizubehalten. Besonders bevorzugt wird über die Codierschnittstelle ein Maximalwert für den Ladestrom und/oder ein Nennwert für die Ladespannung, der einer Festlegung auf das Batterie-System entsprechen kann, und/oder eine an dem Ladeanschluss anliegende Hilfsspannung festgelegt. Durch die Codierung kann somit eine Festlegung der an dem Ladeanschluss ausgegebene Ladeparameter gezielt auf die im Betriebszustand angeschlossene Batterie erfolgen. So kann beispielsweise die Hilfsspannung als ein Ladeparameter festgelegt werden. Dabei ist zu berücksichtigen, dass Batterien existieren, bei denen eine Ladung nur durch das Beaufschlagen eines hierfür vorgesehenen Anschluss-Pins der Batterie mit Hilfsspannung ermöglicht ist.

Besonders bevorzugt weist der Ladeanschluss eine mit der Codierschnittstelle der Steuereinrichtung verbundene Codiervorrichtung auf, die mit einer korrespondierenden Codiereinrichtung, die an der Batterie oder einem Ladekabel vorgesehen ist, zur Realisierung eines Betriebszustands der Ladeeinrichtung lösbar verbindbar ist. Bevorzugt ist die Codiervorrichtung mit der korrespondierenden Codiereinrichtung drahtgebunden lösbar verbindbar, d. h. über einen elektrischen Leiter elektrisch leitend lösbar verbindbar. Die Codiervorrichtung ist dergestalt mit der Steuereinrichtung verbunden, dass über die Codiervorrichtung die Codierung der Steuereinrichtung erfolgen kann. In dem Betriebszustand, in dem die Ladeeinrichtung zum Laden einer Batterie eingerichtet ist oder gerade zum Laden der Batterie verwendet wird, ist die Codierung der Steuereinrichtung somit bevorzugt über die Codiervorrichtung vorgegebene Codierparameter festgelegt, d.h. durch diese Codierparameter direkt festgelegt oder in funktionaler Abhängigkeit von diesen Codierparametern festgelegt. Codiervorrichtung und Codiereinrichtung sind dabei bevorzugt dergestalt zueinander korrespondierend ausgebildet, dass durch das Verbinden von Codiervorrichtung und Codiereinrichtung eine von der Codiereinrichtung abhängige Codierung der Steuereinrichtung erfolgt. Das Verbinden kann beispielsweise ein mechanisches Verbinden sein, insbesondere ein elektromechanisches Verbinden, so dass durch einen mechanischen Eingriff von Codiereinrichtung mit Codiervorrichtung die Codierparameter festgelegt sind, die von der Codiervorrichtung über die Codierschnittstelle zur Codierung der Steuereinrichtung an die Steuereinrichtung gelangen. In einer Ausführungsform ist die Verbindung eine drahtlose Verbindung, beispielsweise mittels NFC-Schnittstellen, die einerseits an der Codiervorrichtung und andererseits an der Codiereinrichtung vorgesehen sind und die im Betriebszustand miteinander koppeln, wodurch die Codiervorrichtung von der Codiereinrichtung Codierparameter erhalten kann, die anschließend von der Codiervorrichtung zur Codierschnittstelle gelangen. Allgemein sind Codierschnittstelle und Codiervorrichtung bevorzugt dergestalt zueinander korrespondierend ausgebildet, dass die in der Codiervorrichtung festgelegten Codierparameter in dem Betriebszustand, in dem das Ladegerät zum Laden der Batterie mit der Batterie verbunden ist, von der Steuereinrichtung über die Codiereinrichtung unmittelbar von der Codiervorrichtung auslesbar sind, so dass das Verbinden des Ladegeräts über das Ladekabel mit der Batterie zwingend die Codierung der Steuereinrichtung über das Zusammenwirken von Codiereinrichtung und Codiervorrichtung mit sich bringt. Durch das Vorsehen von korrespondierender Codiereinrichtung und Codiervorrichtung kann die Ladeeinrichtung auf besonders einfache und zuverlässige Weise auf eine jeweils angeschlossene Batterie eingestellt werden, insbesondere eine zu der jeweils angeschlossenen Batterie passende Ladeleistung, insbesondere einen passenden Ladestrom und/oder eine passende Ladespannung, und/oder einer passende Hilfsspannung ausgeben und/oder die Ladeleistung an passenden Kontakten ausgeben. Besonders bevorzugt ist die Codiereinrichtung im Ladekabel integriert. Besonders bevorzugt weist das Ladekabel eine mit dem Ladeanschluss des Ladegeräts korrespondierende Steckeinrichtung, insbesondere eine korrespondierende Dose oder einen korrespondierenden Stecker, auf, wobei die Codiereinrichtung in der Steckeinrichtung des Ladekabels integriert ist. Dies bringt den besonderen Vorteil mit sich, dass die Codiereinrichtung im Betriebszustand in unmittelbarer Nähe an der Codiervorrichtung des Ladegeräts angeordnet und somit besonders störungsfrei und einfach mit dieser verbindbar ist.

In einer Ausführungsform umfasst die Ladeeinrichtung eine Mehrzahl an unterschiedlichen Ladekabeln, von denen jedes einen ersten Anschluss aufweist, mit dem es mit einer dem Ladekabel zugeordneten Batterie verbindbar oder - im Betriebszustand - verbunden ist, und einen zweiten Anschluss aufweist, der korrespondierend zu dem Ladeanschluss ausgebildet ist und zur Realisierung des Betriebszustands der Ladeeinrichtung lösbar mit dem Ladeanschluss verbindbar ist. Dabei weist der zweite Anschluss eines jeden der Ladekabel jeweils eine dergestalt zu der Codiervorrichtung korrespondierende Codiereinrichtung des Ladekabels auf, das in dem Betriebszustand die Codiereinrichtung des Ladekabels mit der Codiervorrichtung verbunden ist. Die Realisierung des Betriebszustands bedingt somit zwingend die Verbindung von Codiereinrichtung mit Codiervorrichtung. Die Steuereinrichtung ist bevorzugt dazu ausgebildet, zur Codierung die in dem Betriebszustand mit der Codiervorrichtung verbundene Codiereinrichtung des Ladekabels zu erkennen und zumindest einen der Ladeparameter sowohl in Abhängigkeit von der erkannten Codiereinrichtung des Ladekabels als auch in Abhängigkeit von dem durch das Ladeprofil definierten Wert für den Ladestrom und/oder die Ladespannung festzulegen. Erster und zweiter Anschluss können dabei jeweils als Steckeinrichtung, insbesondere als Dose oder Stecker, ausgebildet sein. Die unterschiedlichen Ladekabel unterscheiden sich bevorzugt in ihren Codiereinrichtungen, so dass bei der Realisierung des Betriebszustands mit unterschiedlichen Ladekabeln eine unterschiedliche Codierung der Steuereinrichtung über das Zusammenwirken der jeweiligen Codiereinrichtung mit der Codiervorrichtung erfolgt. Das jeweilige Ladekabel ist dabei bevorzugt gezielt auf eine jeweilige Batterie abgestimmt. Entsprechend können sich die verschiedenen Ladekabel in ihren ersten Anschlüssen ebenfalls unterscheiden, wobei der erste Anschluss des jeweiligen Ladekabels korrespondierend zu dem jeweiligen Anschluss der jeweils zugeordneten Batterie ausgebildet ist. Über die durch das Zusammenwirken von Codiervorrichtung und Codiereinrichtung erfolgte Codierung erfolgt eine Einflussnahme auf zumindest einen der Ladeparameter. Beispielsweise kann die Einflussnahme darin bestehen, dass der durch das Ladeprofil vorgegebene Wert für den jeweiligen Ladeparameter aufgrund der Codierung skaliert wird, d. h. mit einem Faktor multipliziert wird, wobei das Faktor auch zeitabhängig sein kann. Beispielsweise kann die Codierung einen absoluten Grenzwert festlegen, der den vom Ladeprofil vorgegebenen Wert beschränkt. Durch die beschriebene Ausführungsform kann eine benutzerbedingt fehlerhafte Ladung einer Batterie nach Möglichkeit verhindert sein.

In einer Ausführungsform ist die Steuereinrichtung dazu ausgebildet, den Ladestrom in Abhängigkeit von der Codierung festzulegen. Besonders bevorzugt ist die Steuereinrichtung dazu ausgebildet, bei einer ersten Codierung der Steuereinrichtung, die bevorzugt durch das Zusammenwirken der Codiervorrichtung mit einer ersten Codiereinrichtung eines ersten Ladekabels festgelegt ist, einen Ladestrom von mindestens 3 A, insbesondere mindestens 4 A festzulegen. Die Ladeeinrichtung ist somit dazu geeignet, eine erste Batterie mit einem Ladestrom zu laden, der mindestens 3 A, insbesondere mindestens 4 A beträgt. In einer Ausführungsform ist die Steuereinrichtung dazu ausgebildet, die Ladespannung in Abhängigkeit von der Codierung festzulegen. Besonders bevorzugt ist die Steuereinrichtung dazu ausgebildet, bei einer zweiten Codierung der Steuereinrichtung, die bevorzugt durch das Zusammenwirken der Codiervorrichtung mit einer zweiten Codiereinrichtung eine zweiten Ladekabels festgelegt ist, eine Ladespannung mit einer Nennspannung von mindestens 48 V festzulegen. Die Nennspannung bezieht sich dabei auf die zum Laden eines 48 V-Batteriesystems erforderliche Spannung. Die Ladeeinrichtung ist somit dazu geeignet, eine Batterie mit einer Nennspannung von 48 V zu laden. Besonders bevorzugt ist die Steuereinrichtung dazu ausgebildet, bei einer dritten Codierung der Steuereinrichtung, die bevorzugt durch das Zusammenwirken der Codiervorrichtung mit einer dritten Codiereinrichtung eines dritten Ladekabels festgelegt ist, eine Ladespannung mit einer Nennspannung von maximal 6 V festzulegen. Die Ladeeinrichtung ist somit dazu geeignet, eine Batterie, deren Nennspannung 6 V beträgt, zu laden. An dieser Stelle sei allgemein darauf hingewiesen, dass sämtliche in der vorliegenden Beschreibung beschriebenen Ausführungsformen miteinander kombinierbar sind. Allgemein sei ferner darauf hingewiesen, dass jede als erfindungsgemäß beschriebene Ausführungsform jeweils Merkmale aufweisen kann, die oben im Zusammenhang mit gattungsgemäßen Ausführungsformen beschrieben sind.

Allgemein ermöglicht die Codierung eine Einflussnahme auf zumindest einen der Ladeparameter, so dass in dem Betriebszustand zumindest einer der Ladeparameter nicht nur in Abhängigkeit von dem Ladeprofil sondern auch oder stattdessen in Abhängigkeit von der Codierung festgelegt wird. Die Codierung kann, wie erläutert, dabei beispielsweise über eine Skalierung des Ladeprofils Einfluss auf die Festlegung des Ladeparameters nehmen. In einer Ausführungsform ist die Steuereinrichtung dazu ausgebildet, zumindest einen der Ladeparameter dergestalt in Abhängigkeit von der Codierung festzulegen, dass der Ladeparameter auf einen in Abhängigkeit von der Codierung vorgebebenen maximalen Grenzwert beschränkt ist, so dass der von dem Ladeprofil vorgegebene Wert für den Ladeparameter entsprechend gedeckelt ist.

In einer Ausführungsform sind die Codiereinrichtung und die Codiervorrichtung in dem Betriebszustand miteinander verbunden, indem ein elektrischer Kontakt der Codiereinrichtung mit einer elektrisch leitenden Verbindung mit einem elektrischen Kontakt der Codiereinrichtung verbunden ist. Besonders bevorzugt ist die Steuereinrichtung dazu ausgebildet, die elektrisch leitende Verbindung durch Strom- und/oder Spannungsmessung zu identifizieren und in Abhängigkeit von der identifizierten Verbindung den Ladeparameter festzulegen. Beispielsweise kann die elektrisch leitende Verbindung einen in Abhängigkeit von der Codiereinrichtung festgelegten Widerstand aufweisen, der entsprechend identifizierbar ist und in Abhängigkeit von dem der Ladeparameter festgelegt werden kann. Beispielsweise kann die elektrisch leitende Verbindung einen Kurzschluss zwischen Polen der Codiervorrichtung realisieren, wobei durch Bestimmung der Pole, zwischen denen ein Kurzschluss erzeugt ist, die Codierung erfolgen kann. Entsprechend kann auf sehr einfache und zuverlässige Weise durch das Zusammenwirken von Codiereinrichtung und Codiervorrichtung eine Codierung der Steuereinrichtung erfolgen. In einer Ausführungsform sind die Codiereinrichtung und die Codiervorrichtung in dem Betriebszustand miteinander über eine Datenschnittstelle verbunden. Codiereinrichtung und Codiervorrichtung weisen somit jeweils eine zueinander korrespondierende Datenschnittstelle auf. Die Datenschnittstellen können drahtgebundene oder drahtlose Datenschnittstellen sein. Besonders bevorzugt ist über die Verbindung der Datenschnittstellen von Codiereinrichtung und Codiervorrichtung eine Codierung der Steuereinrichtung festgelegt. Besonders bevorzugt ist die Steuereinrichtung dazu ausgebildet, über die Datenschnittstelle Vorgabewerte für zumindest einen der Ladeparameter auszulesen. Die Vorgabewerte können wie oben erläutert eine Skalierung oder die Vorgabe eines Grenzwerts oder die Vorgabe eines konkreten Werts sein.

In einer Ausführungsform sind die Codierparameter in der Codiereinrichtung veränderbar abgelegt, so dass die Codiereinrichtung selbst programmierbar ist und durch eine Programmierung eine Festlegung der Codierparameter in der Codiereinrichtung erfolgen kann. Besonders bevorzugt weist die Codiereinrichtung eine Programmierschnittstelle auf, über die die in der Codiereinrichtung abgelegten Codierparameter in der Codiereinrichtung festlegbar sind. Dies bringt den besonderen Vorteil mit sich, dass die Ladeeinrichtung ein Set an unterschiedlichen Ladekabeln aufweisen kann, die jeweils eine physisch identisch ausgebildete und somit in großen Mengen herstellbare Codiereinrichtung aufweisen und deren Codiereinrichtung sich jeweils durch eine unterschiedliche Programmierung voneinander unterscheiden. Allgemein ist die Codiereinrichtung bevorzugt von dem jeweiligen Ladekabel umfasst. Besonders bevorzugt ist die Programmierschnittstelle als NFC-Programmierschnittstelle ausgebildet, so dass mit einem korrespondierenden Endgerät, insbesondere einem Smartphone, über eine herkömmlich bekannte und vorgesehene NFC-Schnittstelle eine Programmierung der Codiereinrichtung erfolgen kann. Besonders bevorzugt ist die Codiereinrichtung dazu ausgebildet, in einem energieunversorgten Zustand über die Programmierschnittstelle ein Ablegen von Codierparametern zu ermöglichen. Hierzu kann die Codiereinrichtung beispielsweise einen energieunversorgten programmierbaren NFC-Chip aufweisen. Besonders bevorzugt erfolgt über die Programmierung der Codiereinrichtung eine Einstellung der Codiereinrichtung dergestalt, dass sie bei einer elektrisch leitenden Verbindung mit der Codiervorrichtung eine jeweils andere Abhängigkeit des Ladeparameters vorgibt. Beispielsweise kann die Codiereinrichtung so ausgebildet sein, dass über ihre Programmierung die elektrisch leitende Verbindung spezifizierbar ist, mit der sie mit der Codiervorrichtung im betriebszustand in Verbindung steht, wobei beispielsweise über die Programmierung der elektrische Widerstand der elektrisch leitenden Verbindung auswählbar sein kann. Allgemein sind die Codierparameter in der Codiereinrichtung bevorzugt verschlüsselt abgelegt oder ablegbar und insbesondere nur über eine Verschlüsselung veränderbar. Dadurch kann effektiv verhindert sein, dass ein Benutzer die Codiereinrichtung unautorisiert verändern kann.

Besonders bevorzugt ist die Steuereinrichtung dazu ausgebildet, mindestens vier unterschiedliche Codiereinrichtungen zu erkennen und in Abhängigkeit von der jeweils erkannten Codiereinrichtung eine der jeweils erkannten Codiereinrichtung zugeordnete Gruppe an Ladeparametern festzulegen, wobei sich die Gruppe an Ladeparametern, die den vier unterschiedlichen Codiereinrichtungen zugeordnet sind, jeweils durch zumindest einen ihrer Ladeparameter voneinander unterscheiden. Als Ladeparameter kann beispielsweise die Ladespannung und/oder der Ladestrom während eines Aufladezustands der Ladeeinrichtung festgelegt sein und/oder ein Abschaltungszeitpunkt in Abhängigkeit von einem Ladewert der angeschlossenen Batterie festgelegt sein und/oder ein Ladestrom und/oder eine Ladespannung während eines Erhaltungsladungszustands der Ladeeinrichtung festgelegt sein. Die vier unterschiedlichen Codiereinrichtungen können sich beispielsweise in ihrer physischen Ausgestaltung oder in ihrer Programmierung voneinander unterscheiden. In einer Ausführungsform ist die Ladeeinrichtung so ausgebildet, dass sie das Laden von Batterien mit zumindest zwei, insbesondere zumindest drei, insbesondere zumindest vier unterschiedlichen Nennspannungen im Bereich zwischen 6 V und 48 V ermöglicht und/oder das Laden von Batterien mit zumindest zwei, insbesondere zumindest drei unterschiedlichen Ladeströmen im Bereich zwischen 2 A und 4 A ermöglicht.

In einer Ausführungsform ist das Ladegerät dazu ausgebildet, über die Kommunikationsschnittstelle das Ladeprofil zu empfangen und in dem Speicher abzulegen. Besonders bevorzugt ist die Kommunikationsschnittstelle als Bluetooth- oder NFC-Schnittstelle ausgebildet. Durch das Vorsehen einer entsprechenden Kommunikationsschnittstelle kann die Ladeeinrichtung eine besonders einfache Einstellbarkeit von zumindest einem der Ladeparameter bzw. dessen Abhängigkeit von der Zeit durch einen Benutzer ermöglichen, beispielsweise mittels eines Smartphones. Hierzu kann beispielsweise ein erfindungsgemäßes System vorgesehen sein, das neben der Ladeeinrichtung einen Datenträger mit einem Programm umfasst, das korrespondierend zu der Steuereinrichtung ausgebildet ist und über das das Ladeprofil festlegbar ist. Besonders bevorzugt ist das Programm dazu ausgebildet, über eine Benutzeroberfläche, insbesondere eine graphische Benutzeroberfläche (GUI) eine Auswahl eines Ladeprofils zu ermöglichen und das Senden des Ladeprofils über eine Kommunikationsschnittstelle an die Steuereinrichtung zu ermöglichen.

Die Erfindung betrifft sowohl ein Ladegerät einer erfindungsgemäßen Ladeeinrichtung als auch eine erfindungsgemäße Ladeeinrichtung. Das Ladegerät weist ein Gehäuse auf, an dem ein Versorgungsanschluss und eine Ladeanschluss zum Ausgeben einer elektrischen Ladeenergie mit Ladeparametern vorgesehen ist. In dem Gehäuse sind ein Speicher, eine elektronische Steuereinrichtung zur Festlegung von zumindest einem der Ladeparameter und eine zur drahtlosen Kommunikation ausgebildete Kommunikationsschnittstelle vorgesehen. Die Kommunikationsschnittstelle kann sich beispielsweise in dem von dem Gehäuse umschlossenen Innenraum befinden oder zumindest abschnittsweise in dem Gehäuse selbst integriert sein. In dem Speicher ist ein Ladeprofil abgelegt oder ablegbar, das zumindest für einen der Ladeparameter einen Wert definiert, wobei das Ladegerät (1) dazu ausgebildet ist, über die Kommunikationsschnittstelle das Ladeprofil zu empfangen und in dem Speicher abzulengen. Das Gehäuse weist eine Länge von höchstens 20 cm und eine Höhe von weniger als 40 cm auf, wobei die Länge des Gehäuses bevorzugt zwischen dem 1,5-Fachen und dem 2,7-Fachen, insbesondere zwischen dem 1,7-Fachen und dem 2,5-Fachen einer Breite des Gehäuses beträgt. Bevorzugt ist das Produkt aus der Länge mal der Breite des Gehäuses ein Wert von weniger als 250 cm², insbesondere weniger als 200 cm², insbesondere weniger als 150 cm². Bevorzugt weist das Gehäuse mit sämtlichen in ihm vorgesehenen Komponenten des Ladegeräts ein Gewicht von weniger als 500 g auf.

Die Erfindung betrifft ferner ein Verfahren zum Laden einer Batterie. Die Batterie wird über ein Ladekabel an einen Ladeanschluss eines erfindungsgemäßen Ladegeräts angeschlossen, und ein Ladeprofil für das Laden der Batterie wird vorgegeben. Das Ladeprofil bestimmt zumindest einen Wert eines Ladeparameters während des Ladens der Batterie. In einer erfindungsgemäßen Ausführungsform des Verfahrens wird das Ladeprofil über ein mobiles Endgerät in dem Ladegerät festgelegt, insbesondere über ein Smartphone. Bevorzugt weist das mobile Endgerät eine Eingabeschnittstelle auf, über die durch einen Benutzer eine gewünschte Ladegeschwindigkeit vorgegeben wird, wobei durch das mobile Endgerät in Abhängigkeit von der vorgegebenen gewünschten Ladegeschwindigkeit automatisch ein Ladeprofil ausgewählt wird und anschließend dieses ausgewählte Ladeprofil in dem Ladegerät festgelegt wird. Bei der beschriebenen Ausführungsform wird somit in dem Ladegerät rechnergesteuert die von dem Benutzer zuvor ausgewählte gewünschte Ladegeschwindigkeit in ein Ladeprofil "übersetzt", das anschließend in dem Ladegerät festgelegt wird, insbesondere indem es in dem Speicher des Ladegeräts abgelegt wird oder in dem Speicher des Ladegeräts ausgewählt wird. In einer Ausführungsform wird über den Ladeanschluss eine Codierung der Steuereinrichtung durchgeführt, über die zumidest einer der Ladeparameter festgelegt wird. Dabei kann insbesondere vorgesehen sein, dass der Ladeparameter sowohl in Abhängigkeit von der Codierung der Steuereinrichtung als auch in Abhängigkeit von dem Ladeprofil festgelegt wird. In einer Ausführungsform wird bei dem Anschließen des Ladekabels an das Ladegerät zwingend eine Codiereinrichtung des Ladekabels mit einer Codiereinrichtung des Ladegeräts verbunden, wobei die mit der Codiervorrichtung verbundene Codiereinrichtung erkannt wird und somit einer der Ladeparameter sowohl in Abhängigkeit von einem in dem Ladegräte festgelegten Ladeprofil als auch in Abhängigkeit von der erkannten Codiereinrichtung festgelegt wird.

Die Erfindung wird nachfolgend unter Bezugnahme auf sechs Figuren anhand von Ausführungsbeispielen näher erläutert.

Es zeigen:
- Figur 1:: in einer schematischen Prinzipdarstellung eine Ausführungsform eines erfindungsgemäßen Ladegeräts;
- Figur 2:: in einer schematischen Prinzipdarstellung eine Konverterschaltung des Ladegeräts gemäß Figur 1;
- Figur 3:: in einer schematischen Prinzipdarstellung eine Ausführungsform einer erfindungsgemäßen Ladeeinrichtung mit dem Ladegerät gemäß Figur 1;
- Figur 4:: in einer schematischen Übersichtsdarstellung die Funktionsweise einer Ausführungsform einer erfindungsgemäßen Ladeeinrichtung;
- Figur 5:: in einer schematischen Prinzipdarstellung das Zusammenwirken von Codiereinrichtung und Codiervorrichtung bei einer Ausführungsform einer erfindungsgemäßen Ladeeinrichtung;
- Figur 6:: in einer schematischen Prinzipdarstellung die Funktionsweise der Codierung bei einer Ausführungsform einer erfindungsgemäßen Ladeeinrichtung.

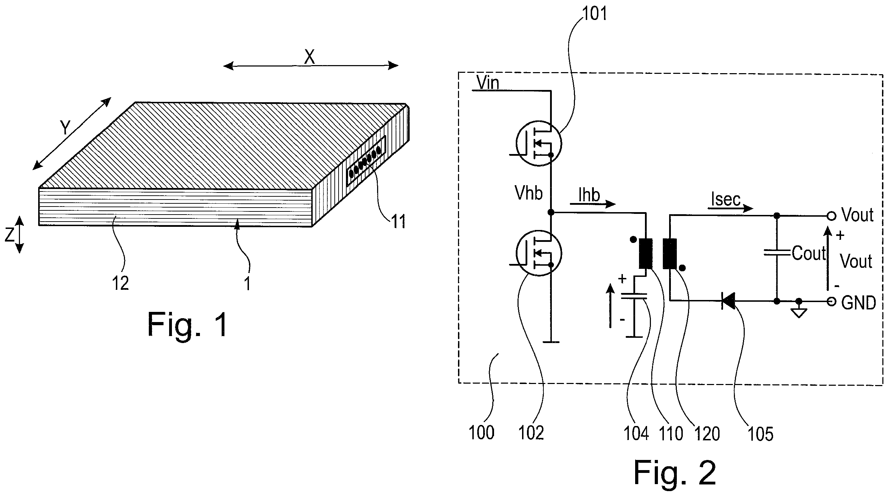

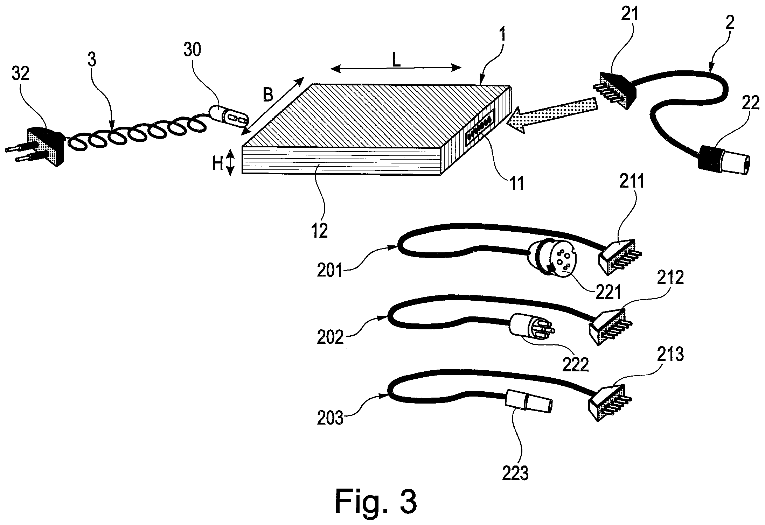

In Figur 1 ist in einer schematischen Prinzipdarstellung eine Ausführungsform eines erfindungsgemäßen Ladegeräts 1 zu Erläuterungszwecken schematisch dargestellt. Das Ladegerät 1 umfasst ein Gehäuse 12, das sich mit einer Länge L in einer Längsrichtung X erstreckt, mit einer Breite B in einer Transversalrichtung Y erstreckt und mit einer Höhe H in einer Vertikalrichtung Z erstreckt, wobei Vertikalrichtung Z, Transversalrichtung Y und Längsrichtung X senkrecht aufeinander stehen, siehe auch Figur 3 mit der Darstellung einer Ausführungsform einer erfindungsgemäßen Ladeeinrichtung mit dem Ladegerät 1 gemäß Figur 1. Das Ladegerät 1 weist einen Ladeanschluss 11 auf, der vorliegend als Dose ausgebildet ist, in die der Stecker eines mit dem Ladegerät 1 korrespondierenden Ladekabels 2 einsteckbar ist, siehe auch Figur 3. Bei der beschriebenen Ausführungsform ist das Gehäuse 12 aus einem Kunststoff hergestellt und in sich starr und umschließt einen Innenraum bis auf Lüftungsöffnungen vollständig geschlossen. Die Lüftungsöffnungen sind in Figur 1 nicht eingezeichnet. In anderen Ausführungsformen kann auf Lüftungsöffnungen wohlmöglich auch verzichtet werden, oder das Umschließen des Innenraums durch das Gehäuse 12 kann großflächig unterbrochen sein. Bei dem beschriebenen Ausführungsbeispiel beträgt die Länge L das 1,8-Fache der Breite B, und die Höhe H beträgt 38 mm, was als oberer Grenzwert für die Höhe allgemein vorteilhaft ist.

In Figur 2 ist die Konverterschaltung des Ladegeräts 1 gemäß Figur 1 schematisch dargestellt. Die Konverterschaltung umfasst eine Primärspule 110 und eine Sekundspule 120 sowie entsprechend einen Primärkreis mit der Primärspule 110 und einen Sekundärkreis mit der Sekundspule 120. Der Primärkreis ist an dem in den Figuren nicht dargestellten Versorgungsanschluss angeschlossen, über den das Ladegerät 1 über ein externes Versorgungsnetz mit elektrischer Energie versorgt ist. Der Sekundärkreis ist über die dargestellten Kontakte an V_{OUT} mit dem Ladeanschluss 11 verbunden, über den das Ladegerät 1 an eine Batterie anschließbar ist zum Laden der Batterie mit Gleichspannung. Die Konverterschaltung des beschriebenen Ausführungsbeispiels weist einen Spannungsteiler mit zwei parallelen Spannungsteilerarmen auf, der einem ersten aktiven Schaltbauteil 101 nachgeschaltet ist. In einem ersten der Spannungsteilerarme ist ein zweites aktives Schaltbauteil 102 vorgesehen. In einem zweiten der beiden Spannungsteilerarme sind in Serie die Primärspule 110 und ein Speicherkondensator 104 geschaltet. Der Speicherkondensator weist allgemein bei erfindungsgemäßen Ausführungsformen bevorzugt eine Kapazität zwischen ca. 0,5 nF und 500 nF auf, wobei die Kapazität in Abhängigkeit von dem gewünschten Arbeitsfrequenzbereich und/oder von der technisch üblicherweise vorhandenen Streuinduktivität in der Konverterschaltung abhängig gewählt werden kann. In dem vorliegenden Ausführungsbeispiel sind die aktiven Schaltbauteile 101, 102 jeweils als MOSFET ausgebildet. Die Konverterschaltung weist ferner eine Diode 105 auf, die als Einweggleichrichter wirkt und über die sichergestellt ist, dass an dem Ladeanschluss 11 eine Gleichspannung ausgegeben wird. Auch wenn die in Figur 2 dargestellte Konverterschaltung der beschriebenen Ausführungsform lediglich ein bevorzugtes Ausführungsbeispiel darstellt, so hat sich die Verwendung einer solchen Konverterschaltung als besonders vorteilhaft herausgestellt. Die Steuereinrichtung des Ladegeräts 1 kann die Duty-Cycle eines jeden der aktiven Schaltbauteile 101, 102 und die Arbeitsfrequenz der Schaltbauteile 101, 102 einstellen. Bevorzugt ist die Arbeitsfrequenz für beide Schaltbauteile 101, 102 dieselbe und sind die Duty-Cycle der Schaltbauteile 101, 102 zueinander invertiert. Durch Einstellen der Duty-Cycle der aktiven Schaltbauteile 101, 102 kann die Steuereinrichtung die von der Sekundärspule 120 ausgegebene Spannung gezielt vorgeben. Durch das Vorsehen des zur Primärspule 110 in Serie geschalteten Speicherkondensators 104 ist darüber hinaus eine möglichst gleichmäßige Energieversorgung der Sekundärspule 120 sichergestellt. Durch das Vorsehen eines Einweggleichrichters im Sekundärkreis ist darüber hinaus die Rückkopplung zwischen Primärkreis und Sekundärkreis begrenzt, so dass der Primärkreis über einen erheblichen Duty-Cycle-Bereich resonant betrieben werden kann, was eine effiziente Energieübertragung unter Vermeidung von hohen Strompulsen gewährleistet. Über die Einstellung der Arbeitsfrequenz kann darüber hinaus der effektiv an dem Ladeanschluss 11 ausgegebene Ladestrom eingestellt werden. Für den Fachmann ist ersichtlich, dass mit dem Vorsehen der Konverterschaltung gemäß Figur 2 eine energieverlustarme Schaltung gewährleistet ist, die unter Vermeidung von hohen Strompeaks das Laden einer Batterie sowohl in einem weiten Nennspannungsbereich als auch in einem weiten Ladestrombereich ermöglicht.

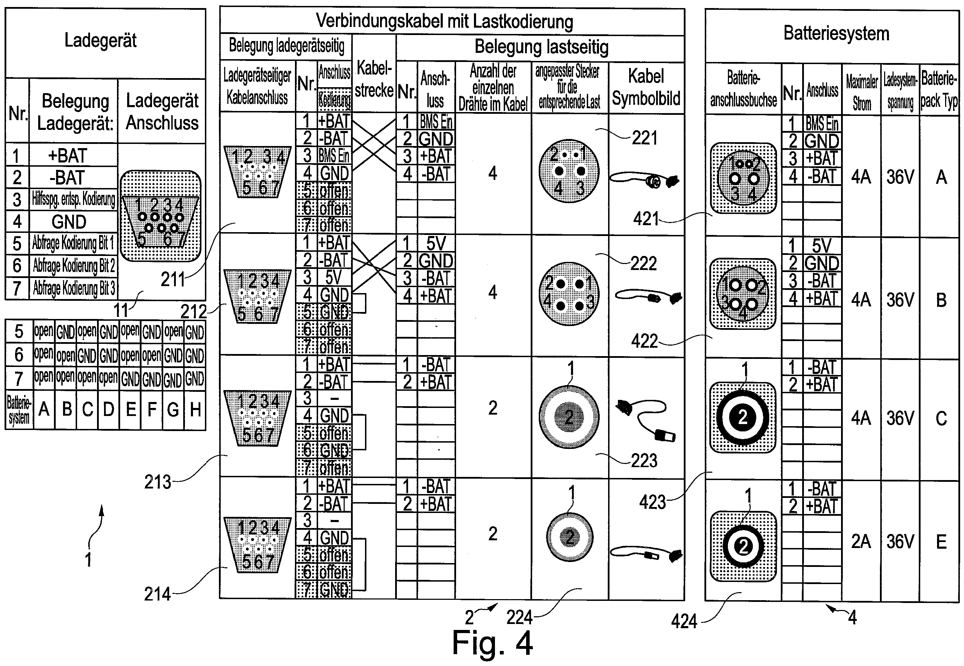

Aus der Zusammenschau der Figuren 3 und 4 ist eine Ausführungsform einer erfindungsgemäßen Ladeeinrichtung ersichtlich, die neben dem Ladegerät 1 ein Versorgungskabel 3 und mehrere unterschiedliche Ladekabel 2, 201, 202, 203 umfasst. Das Versorgungskabel 3 weist einen herkömmlichen Stecker 32 zum Verbinden mit einer herkömmlichen Steckdose eines elektrischen Versorgungsnetztes auf sowie einen Stecker 30, der korrespondierend zu dem nicht dargestellten Versorgungsanschluss des Ladegeräts 1 ausgebildet ist, so dass das Ladegerät 1 über das Versorgungskabel 3 an ein externes elektrisches Versorgungsnetz angeschlossen werden kann und von diesem versorgt werden kann. Die unterschiedlichen Ladekabel 2, 201, 202, 203 weisen jeweils einen ersten Anschluss 22, 221, 222, 223 auf, der korrespondierend zu einer dem jeweiligen Ladekabel 2, 201, 202, 203 zugeordneten Batterie ausgebildet ist, sowie einen zweiten Anschluss 21, 211, 212, 213, wobei der zweite Anschluss 21, 211, 212, 213, eines jeden der Ladekabel 2, 201, 202, 203 korrespondierend zu dem Ladeanschluss 11 des Ladegeräts 1 ausgebildet ist. Dabei sind die ersten Anschlüsse 22, 221, 222, 223, wie aus Figur 4 ersichtlich, jeweils auf einen bestimmten Batterietyp angepasst, nämlich auf eine bestimmte Batterieanschlussbuchse 421, 422, 423, 424, so dass die jeweiligen Ladekabel 2, 201, 202, 203 mit jeweils genau einer zugeordneten Batterie verbindbar sind. Hierdurch ist sichergestellt, dass zum Laden einer entsprechenden Batterie nur das jeweils dafür vorgesehene Ladekabel 2, 201, 202, 203 der Ladeeinrichtung verwendet werden kann. Die zweiten Anschlüsse 21, 211, 212, 213, weisen, wie aus Figur 4 ersichtlich, jeweils Steckkontakte auf, die mit Buchsenkontakten des Ladeanschlusses 11 des Ladegeräts 1 kompatibel sind bzw. mit diesen korrespondierend ausgebildet sind. Allerdings unterscheiden sich die zweiten Anschlüsse 211, 212, 213, wie in Figur 4 dargestellt, in ihrer Belegung untereinander. Entsprechend wird durch das Einstecken des jeweiligen zweiten Anschlusses 211, 212, 213, 214 in den Ladeanschluss 11 des Ladegeräts 1 jeweils eine Codierung vorgenommen, über die zumindest ein Ladeparameter festgelegt wird. Wie aus Figur 4 ersichtlich bewirkt die Codierung jeweils eine Festlegung des Ladestroms und der Ladespannung dahingehend, dass der Ladestrom auf einen Maximalwert begrenzt wird und dass die Ladespannung auf ein Batteriesystem festgelegt wird, wobei je nach Batteriesystem die Nennspannung festgelegt wird und gegebenenfalls eine Hilfsspannung festgelegt wird. Selbstverständlich kann die Ladeeinrichtung weitere Ladekabel umfassen, die jeweils entsprechend zu dem Ladeanschluss 11 korrespondierende zweite Anschlüsse 21, 211, 212, 213, 214 aufweisen, deren elektrischen Kontakte noch anders belegt sind zum Vorgeben von noch anderen Ladeparametern bzw. zum Realisieren einer noch anderen Codierung der Steuereinrichtung des Ladegeräts 1.

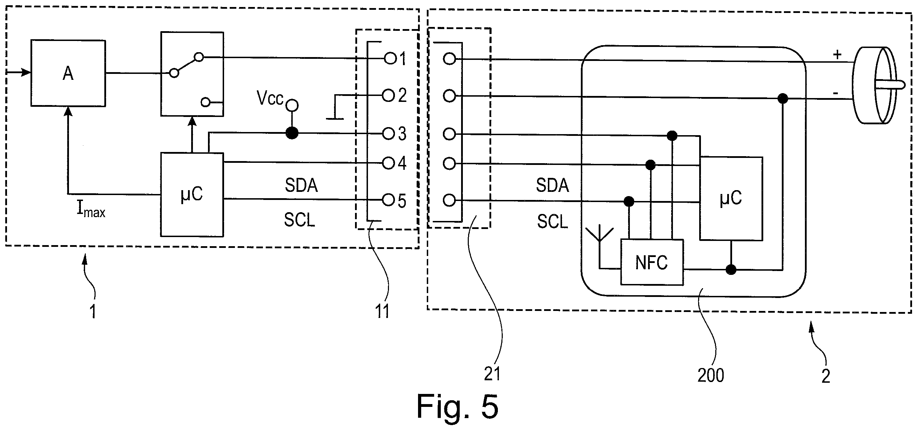

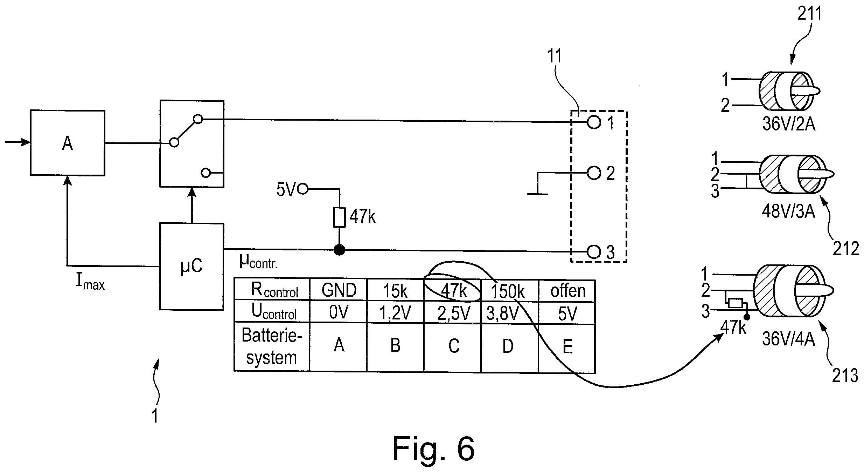

In den Figuren 5 und 6 sind in sehr einfachen Prinzipdarstellungen Möglichkeiten offenbart, wie eine Codierung der Steuereinrichtung über die Verbindung zwischen Ladekabel 2 und Ladegerät 1 erfolgen kann, indem der zweite Anschluss 21 des Ladekabels 2 mit dem Ladeanschluss 11 des Ladegeräts 1 verbunden ist. Bei dem Ausführungsbeispiel gemäß Figur 5 weist das Ladekabel 2 einen Codierschaltkreis 200 mit einem Microcontroller und einem in einem energieunversorgten Zustand programmierbaren NFC-Chip auf. Der NFC-Chip kann über ein mobiles Endgerät, wie beispielsweise ein Smartphone, programmiert werden, beispielsweise auch werksseitig bei Herstellung des Ladekabels 2, beispielsweise über eine verschlüsselte Programmierung. Der Microcontroller des Ladekabels 2 wird im Betriebszustand, in dem das Ladekabel 2 mit dem Ladegerät 1 verbunden ist und eine Batterie mit dem Ladegerät 1 über das Ladekabel 2 aufgeladen werden kann oder zumindest hierzu vorbereitet wird, von dem Ladegerät 1 versorgt. Die Steuereinrichtung des Ladegeräts 1 weist einen Microcontroller auf, der zum Auslesen des NFC-Chips über den Microcontroller des Ladegeräts 2 geeignet ist und der zum Steuern des Ladegeräts 1 dergestalt ausgebildet ist, dass er sämtliche Ladeparameter während des Ladevorgangs vorgibt. Bei dem Ausführungsbeispiel gemäß Figur 6 ist eine Ladeeinrichtung mit verschiedenen Ladekabeln 2, 201, 202, 203 vorgesehen, die jeweils einen unterschiedlichen zweiten Anschluss 211, 212, 213, aufweisen, wobei diese zweiten Anschlüsse 21,, 212, 213 Steckkontakte aufweisen, mit denen sie in korrespondierende Buchsen des Ladeanschlusses 11 des Ladegeräts 1 verbunden werden können. Aus Figur 6 ist beispielhaft ersichtlich, dass eine Codierung der Steuereinrichtung des Ladegeräts 1 erfolgt, indem über eine Strom- bzw. Spannungsmessung festgestellt wird, ob überhaupt ein dritter Steckkontakt in den Versorgungsanschluss 11 eingesteckt ist und wenn ja welcher Widerstand zwischen zweitem und drittem Steckkontakt geschaltet ist, wobei in Abhängigkeit von der Codierung zumindest einer der Ladeparameter festgelegt wird.

### Bezugszeichenliste

- 1: Ladegerät
- 2: Ladekabel
- 3: Versorgungskabel
- .11: Ladeanschluss
- 12: Gehäuse
- 21: zweiter Anschluss
- 22: erster Anschluss
- 30: Stecker
- 32: herkömmlicher Stecker
- 101: erstes aktives Schaltbauteil
- 102: zweites aktives Schaltbauteil
- 104: Speicherkondensator
- 105: Diode
- 110: Primärspule
- 120: Sekundärspule
- 200: Codierschaltkreis
- 201: Ladekabel
- 202: Ladekabel
- 203: Ladekabel
- 211: zweiter Anschluss
- 212: zweiter Anschluss
- 213: zweiter Anschluss
- 221: erster Anschluss
- 222: erster Anschluss
- 223: erster Anschluss
- 421: Batterieanschlussbuche
- 422: Batterieanschlussbuche
- 423: Batterieanschlussbuche
- 424: Batterieanschlussbuche
- B: Breite
- H: Höhe
- L: Länge
- X: Längsrichtung
- Y: Transversalrichtung
- Z: Vertikalrichtung

## Patentansprüche

1. Ladegerät (1) für eine Ladeeinrichtung zum Laden einer Batterie mit einer Ladeleistung von mindestens 80 Watt und einem Ladestrom von mindestens 2 A, wobei das Ladegerät (1) ein Gehäuse (12) aufweist, an dem ein Versorgungsanschluss und ein Ladeanschluss (11) zum Ausgeben einer elektrischen Ladeenergie mit Ladeparametern, insbesondere Ladestrom und/oder Ladespannung, vorgesehen ist, wobei in dem Gehäuse (12) ein Speicher, eine elektronische Steuereinrichtung ausgebildet zur Festlegung von zumindest einem der Ladeparameter und eine Kommunikationsschnittstelle vorgesehen sind, wobei in dem Speicher ein Ladeprofil abgelegt oder ablegbar ist, das zumindest für einen der Ladeparameter einen Wert definiert, wobei das Gehäuse (12) eine Länge von höchstens 20 cm, insbesondere höchstens 17 cm, und eine Höhe von weniger als 40 mm aufweist und das Gehäuse (12) mit sämtlichen in ihm vorgesehenen Komponenten des Ladegeräts (1) ein Gewicht von weniger als 500 g aufweist,
**dadurch gekennzeichnet, dass**
die Kommunikationsschnittstelle zur drahtlosen Kommunikation, insbesondere als Bluetooth- oder NFC-Schnittstelle ausgebildet ist, und dass das Ladegerät (1) dazu ausgebildet ist, über die Kommunikationsschnittstelle das Ladeprofil zu empfangen und in dem Speicher abzulegen , wobei insbesondere die Länge des Gehäuses (12) zwischen dem 1,5-Fachen und dem 2,7-Fachen einer Breite des Gehäuses (12) beträgt und/oder das Produkt aus der Länge mal der Breite des Gehäuses ein Wert von weniger als 250 cm², insbesondere weniger als 200 cm², insbesondere weniger als 150 cm² ist.

2. Ladegerät (1) nach Anspruch 1,
**dadurch gekennzeichnet, dass**
das Gehäuse (12) ein Kunststoffgehäuse ist und in dem Gehäuse (12) ausschließlich eine passive Luftzirkulation vorgesehen ist.

3. Ladegerät (1)nach einem der vorangehenden Ansprüche,
**dadurch gekennzeichnet, dass**
das Ladegerät (1) eine Konverterschaltung mit einer Primärspule (110) und einer Sekundärspule (120) aufweist, wobei die Konverterschaltung einen Spannungsteiler mit zwei parallelen Spannungsteilerarmen aufweist, der einem ersten aktiven Schaltbauteil (101) nachgeschaltet ist, wobei die Primärspule (110) und in Reihe zu der Primärspule (110) ein Speicherkondensator (104) in einem ersten der Spannungsteilerarme vorgesehen ist und ein zweites aktives Schaltbauteil (102) in einem zweiten der Spannungsteilerarme vorgesehen ist, wobei die Steuereinrichtung zum Ansteuern der aktiven Schaltbauteile (101) mit einem Duty-Cycle und einer Arbeitsfrequenz ausgebildet ist, wobei insbesondere zwischen der Sekundärspule (120) und dem Ladeanschluss (11) ein Einweggleichrichter vorgesehen ist.

4. Ladegerät (1)nach Anspruch 3,
**dadurch gekennzeichnet, dass**
die Steuereinrichtung ausgebildet ist zum Verändern des Duty-Cycles zur Anpassung der an dem Ladeanschluss (11) ausgegebenen Ladespannung zwischen einer Minimalspannung und einer Maximalspannung, die mindestens das Dreifache der Minimalspannung beträgt, und zum Verändern der Arbeitsfrequenz zur Regelung des Ladestroms.

5. Ladegerät (1)nach einem der vorangehenden Ansprüche,
**dadurch gekennzeichnet, dass**
die Steuereinrichtung eine Codierschnittstelle aufweist, über die durch eine Codierung der Steuereinrichtung zumindest einer der Ladeparameter, insbesondere in Abhängigkeit von dem Ladeprofil, festlegbar ist, wobei insbesondere über die Codierschnittstelle ein Maximalwert für den Ladestrom, ein Nennwert für die Ladespannung und/oder eine an dem Ladeanschluss ausgegebene Hilfsspannung festlegbar ist.

6. Ladegerät (1)nach Anspruch 5,
**dadurch gekennzeichnet, dass**
der Ladeanschluss (11) eine mit der Codierschnittstelle der Steuereinrichtung verbundene Codiervorrichtung aufweist, die mit einer korrespondierenden Codiereinrichtung, die an der Batterie oder einem Ladekabel (2, 201, 202, 203) vorgesehen ist, zur Realisierung eines Betriebszustands der Ladeeinrichtung lösbar verbindbar ist, insbesondere drahtgebunden lösbar verbindbar ist, wobei in dem Betriebszustand die Codierung der Steuereinrichtung über durch die Codiervorrichtung vorgegebene Codierparameter festgelegt ist, wobei insbesondere die in der Codiervorrichtung festgelegten Codierparameter in dem Betriebszustand, in dem das Ladegerät (1) zum Laden der Batterie mit der Batterie verbunden ist, von der Steuereinrichtung über die Codiereinrichtung unmittelbar von der Codiervorrichtung auslesbar sind.

7. Ladegerät (1)nach einem der Ansprüche 5 bis 6,
**dadurch gekennzeichnet, dass**
die Steuereinrichtung dazu ausgebildet ist, den Ladestrom in Abhängigkeit von der Codierung festzulegen, wobei insbesondere die Steuereinrichtung dazu ausgebildet ist, bei einer ersten Codierung der Steuereinrichtung einen Ladestrom von mindestens 3 A, insbesondere mindestens 4 A festzulegen,
und/oder dass
die Steuereinrichtung dazu ausgebildet ist, die Ladespannung in Abhängigkeit von der Codierung festzulegen, wobei insbesondere die Steuereinrichtung dazu ausgebildet ist, bei einer zweiten Codierung der Steuereinrichtung eine Ladespannung mit einer Nennspannung von mindestens 48 V festzulegen und insbesondere bei einer dritten Codierung der Steuereinrichtung eine Ladespannung mit einer Nennspannung von höchstens 6 V festzulegen.

8. Ladegerät (1)nach einem der Ansprüche 5 bis 7,
**dadurch gekennzeichnet, dass**
die Steuereinrichtung dazu ausgebildet ist, den Ladeparamater dergestalt in Abhängigkeit von der Codierung festzulegen, dass der Ladeparameter auf einen in Abhängigkeit von der Codierung vorgegebenen maximalen Grenzwert beschränkt ist.

9. Ladeeinrichtung umfassend ein Ladegerät (1) nach einem der vorangehenden Ansprüche 6 bis 8,
**dadurch gekennzeichnet, dass**
die Ladeeinrichtung eine Mehrzahl an unterschiedlichen Ladekabeln (2, 201, 202, 203) umfasst, von denen jedes einen ersten Anschluss (22, 221, 222, 223) aufweist, mit dem es mit einer dem Ladekabel (2, 201, 202, 203) zugeordneten Batterie verbindbar oder verbunden ist, und einen zweiten Anschluss (21, 211, 212, 213) aufweist, der korrespondierend zu dem Ladeanschluss (11) ausgebildet und zur Realisierung des Betriebszustands der Ladeeinrichtung lösbar mit dem Ladeanschluss (11) verbindbar ist, wobei der zweite Anschluss (21, 211, 212, 213) eines jeden Ladekabels (2, 201, 202, 203) jeweils eine dergestalt zu der Codiervorrichtung korrespondierende Codiereinrichtung des Ladekabels (2, 201, 202, 203) aufweist, dass in dem Betriebszustand die Codiereinrichtung des Ladekabels (2, 201, 202, 203) mit der Codiervorrichtung verbunden ist, wobei die Steuereinrichtung dazu ausgebildet ist, zur Codierung die in dem Betriebszustand mit der Codiervorrichtung verbundene Codiereinrichtung des Ladekabels (2, 201, 202, 203) zu erkennen und zumindest einen der Ladeparamater sowohl in Abhängigkeit von der erkannten Codiereinrichtung des Ladekabels (2, 201, 202, 2039 als auch in Abhängigkeit von dem durch das Ladeprofil definierten Wert für den Ladestrom und/oder die Ladespannung festzulegen.

10. Ladeeinrichtung nach Anspruch 9,
**dadurch gekennzeichnet, dass**
die Codiereinrichtung und die Codiervorrichtung in dem Betriebszustand miteinander verbunden sind, indem ein elektrischer Kontakt der Codiereinrichtung mit einer elektrisch leitenden Verbindung mit einem elektrischen Kontakt der Codiereinrichtung verbunden ist, wobei die Steuereinrichtung dazu ausgebildet ist, die elektrisch leitende Verbindung durch Strom- und/oder Spannungsmessung zu identifizieren und in Abhängigkeit von der identifizierten Verbindung den Ladeparameter festzulegen.

11. Ladeeinrichtung nach einem der Ansprüche 9 bis 10,
**dadurch gekennzeichnet, dass**
die Codiereinrichtung und die Codiervorrichtung in dem Betriebszustand miteinander über eine Datenschnittstelle verbunden sind, wobei die Steuereinrichtung dazu ausgebildet ist, über die Datenschnittstelle Vorgabewerte für zumindest einen der Ladeparameter auszulesen.

12. Ladeeinrichtung nach einem der Ansprüche 9 bis 11,
**dadurch gekennzeichnet, dass**
die Codierparameter in der Codiereinrichtung veränderbar abgelegt sind, wobei die Codiereinrichtung eine Programmierschnittstelle aufweist, insbesondere eine NFC-Programmierschnittstelle, über die die in der Codiereinrichtung abgelegten Codierparameter in der Codiereinrichtung festlegbar sind.

13. Ladeeinrichtung nach Anspruch 12,
**dadurch gekennzeichnet, dass**
die Codiereinrichtung dazu ausgebildet ist, in einem energieunversorgten Zustand über die Programmierschnittstelle ein Ablegen von Codierparametern zu ermöglichen.

14. Ladeeinrichtung nach einem der Ansprüche 9 bis 13,
**dadurch gekennzeichnet, dass**
die Steuereinrichtung dazu ausgebildet ist, mindestens vier unterschiedliche Codiereinrichtungen zu erkennen und in Abhängigkeit von der jeweils erkannten Codiereinrichtung eine der jeweils erkannten Codiereinrichtung zugeordnete Gruppe an Ladeparametern festzulegen, wobei sich die Gruppen an Ladeparametern, die den vier unterschiedlichen Codiereinrichtungen zugeordnet sind, jeweils durch zumindest einen ihrer Ladeparameter voneinander unterscheiden.

15. Verfahren zum Laden einer Batterie, wobei eine Batterie über ein Ladekabel (2, 201, 202, 203) an einen Ladeanschluss (11) eines Ladegeräts (1) nach einem der Ansprüche 1 bis 8 angeschlossen wird und ein Ladeprofil für das Laden der Batterie vorgegeben wird,
**dadurch gekennzeichnet, dass**
das Ladeprofil über ein mobiles Endgerät in dem Ladegerät (1) festgelegt wird, wobei insbesondere das mobile Endgerät eine Eingabeschnittstelle aufweist, über die durch einen Benutzer eine gewünschte Ladegeschwindigkeit vorgegeben wird, und durch das mobile Endgerät in Abhängigkeit von der vorgegebenen gewünschten Ladegeschwindigkeit automatisch ein Ladeprofil ausgewählt wird und anschließend dieses ausgewählte Ladeprofil in dem Ladegerät (1) festgelegt wird.

16. Verfahren nach Anspruch 15,
**dadurch gekennzeichnet, dass**
über den Ladeanschluss (11) eine Codierung der Steuereinrichtung durchgeführt wird, über die zumindest einer der Ladeparameter festgelegt wird.

17. Verfahren nach Anspruch 16,
**dadurch gekennzeichnet, dass**
bei dem Anschließen des Ladekabels (2, 201, 202, 203) an das Ladegerät (1) zwingend eine Codiereinrichtung des Ladekabels (2, 201, 202, 203) mit einer Codiereinrichtung des Ladegeräts (1) verbunden wird, wobei die mit der Codiervorrichtung verbundene Codiereinrichtung erkannt wird und zumindest einer der Ladeparameter sowohl in Abhängigkeit von einem in dem Ladegerät (1) festgelegten Ladeprofil als auch in Abhängigkeit von der erkannten Codiereinrichtung festgelegt wird.

## Claims

1. Charger (1) for a charging device for charging a battery with a charging power of at least 80 W and a charging current of at least 2 A, wherein the charger (1) has a housing (12) on which a supply connection and a charging connection (11) for outputting an electric charging energy with charging parameters, in particular charging current and/or charging voltage, are provided, wherein a memory, an electronic control unit for setting at least one of the charging parameters and a communication interface are provided in the housing (12), wherein a charging profile is or can be stored in the memory, which charging profile defines a value for at least one of the charging parameters, wherein the housing (12) has a length of no more than 20 cm, in particular no more than 17 cm, and a height of less than 40 mm, and wherein the housing (12) with all the components of the charger (1) provided in it has a weight of less than 500 g,
**characterized in that**
the communication interface is designed for wireless communication, in particular as a Bluetooth or NFC interface, and that the charger (1) is designed to receive the charging profile via the communication interface and store it in the memory, wherein in particular the length of the housing (12) is between 1.5 times and 2.7 times a width of the housing (12) and/or the product of the length times the width of the housing is a value of less than 250 cm², in particular less than 200 cm², in particular less than 150 cm².

2. Charger (1) according to claim 1,
**characterized in that**
the housing (12) is a plastic housing and that exclusively a passive air circulation is provided in the housing (12).

3. Charger (1) according to any one of the preceding claims, **characterized in that**
the charger (1) comprises a converter circuit with a primary coil (110) and a secondary coil (120), wherein the converter circuit comprises a voltage divider with two parallel voltage divider arms, which voltage converter is connected downstream of a fist active switching component (101), wherein the primary coil (110) and a storage capacitor (104) connected in series with the primary coil (110) are provided in a first of the voltage divider arms and a second active switching component (102) is provided in a second of the voltage divider arms, wherein the control unit is designed to control the active switching components (101) with a duty cycle and an operating frequency, wherein in particular a one-way rectifier is provided between the secondary coil (120) and the charging connection (11).

4. Charger (1) according to claim 3,
**characterized in that**
the control unit is designed for changing the duty cycles for adjustment of the charging voltage output at the charging connection (11) between a minimum voltage and a maximum voltage that is at least three times the minimum voltage, and for changing the operating frequency for control of the charging current.

5. Charger (1) according to any one of the preceding claims, **characterized in that**
the control unit has a coding interface via which at least one of the charging parameters can be defined by coding the control unit, in particular as a function of the charging profile, wherein in particular a maximum value for the charging current, a rated value for the charging voltage and/or an auxiliary voltage output at the charging connection can be set via the coding interface.

6. Charger (1) according to claim 5,
**characterized in that**
the charging connection (11) includes a coding device connected to the coding interface of the control unit, which coding device can be detachably connected, in particular by a wired connection, to a corresponding coding facility that is provided on the battery or on a charging cable (2, 201, 202, 203) to establish an operating state of the charging device, wherein in the operating state, the coding of the control unit is set via coding parameters specified by the coding device, wherein in particular the coding parameters set in the coding device can be read directly from the coding device by the control unit via the coding facility in the operating state in which the charger (1) is connected to the battery for charging the battery.

7. Charger (1) according to any one of claims 5 to 6, **characterized in that**
the control unit is designed to set the charging current as a function of the coding, wherein in particular the control unit is designed to set a charging current of at least 3 A, in particular at least 4 A, during a first coding of the control unit,
and/or that
the control unit is designed to set the charging voltage as a function of the coding, in particular the control unit being designed to set a charging voltage with a rated voltage of at least 48 V at a second coding of the control unit and in particular to set a charging voltage with a rated voltage of at most 6 V at a third coding of the control unit.

8. Charger (1) according to any one of claims 5 to 7,
**characterized in that**
the control unit is designed to set the charging parameter as a function of the coding in such a way that the charging parameter is limited to a maximum limit value which is specified as a function of the coding.

9. Charging device comprising a charger (1) according to one of the preceding claims 6 to 8,
**characterized in that**
the charging device comprises a plurality of different charging cables (2, 201, 202, 203), each of which has a first connection (22, 221, 222, 223), with which it can be connected or is connected to a battery associated with the charging cable (2, 201, 202, 203), and a second connection (21, 211, 212, 213), which is designed to correspond to the charging connection (11) and can be detachably connected to the charging connection (11) in order to establish the operating state of the charging device, wherein the second connection (21, 211, 212, 213) of each charging cable (2, 201, 202, 203) respectively has a coding facility of the charging cable (2, 201, 202, 203) corresponding to the coding device in such a way that in the operating state the coding facility of the charging cable (2, 201, 202, 203) is connected to the coding device, the control unit being designed, for coding, to identify the coding device of the charging cable (2, 201, 202, 203) connected to the coding device in the operating state and to set at least one of the charging parameters both as a function of the identified coding device of the charging cable (2, 201, 202, 203) and as a function of the value for the charging current and/or the charging voltage defined by the charging profile.

10. Charging device according to claim 9,
**characterized in that**
the coding facility and the coding device are connected to each other in the operating state by an electrical contact of the coding facility being connected to an electrical contact of the coding device by means of an electrically conductive connection, the control unit being designed to identify the electrically conductive connection by means of a current and/or voltage measurement and to set the charging parameter as a function of the identified connection.

11. Charging device according to any one of claims 9 to 10, **characterized in that**
the coding facility and the coding device are connected to each other in the operating state via a data interface, wherein the control unit is designed to read out specified values for at least one of the charging parameters via said data interface.

12. Charging device according to any one of claims 9 to 11, **characterized in that**
the coding parameters are changeably stored in the coding facility, wherein the coding facility has a programming interface, in particular an NFC programming interface, via which the coding parameters stored in the coding facility can be set in the coding facility.

13. Charging device according to claim 12,
**characterized in that**
the coding facility is designed to enable storing of coding parameters via the programming interface in a de-energized state.

14. Charging device according to any one of claims 9 to 13, **characterized in that**
the control unit is designed to identify at least four different coding facilities and to set a group of charging parameters assigned to the respectively identified coding facility as a function of the respectively identified coding facility, wherein the groups of charging parameters assigned to the four different coding facilities respectively differ from each other by at least one of their charging parameters.

15. Method for charging a battery, wherein a battery is connected to a charging connection (11) of a charger (1) according to any one of claims 1 to 8 by means of a charging cable (2, 201, 202, 203) and a charging profile for charging the battery is specified,
**characterized in that**
the charging profile is set in the charger (1) via a mobile terminal device, in particular the mobile terminal device having an input interface via which a desired charging speed is specified by a user, and a charging profile is automatically selected by the mobile terminal device as a function of the desired charging speed and this selected charging profile is then set in the charger (1).

16. Method according to claim 15,
**characterized in that**
coding of the control unit is carried out via the charging connection (11), via which coding at least one of the charging parameters is set.

17. Method according to claim 16,
**characterized in that**
when the charging cable (2, 201, 202, 203) is connected to the charger (1), a coding facility of the charging cable (2, 201, 202, 203) is necessarily connected to a coding facility of the charger (1), wherein the coding facility connected to the coding device is identified and at least one of the charging parameters is set both as a function of a charging profile defined in the charger (1) and as a function of the identified coding facility.

## Revendications

1. Chargeur (1) pour un dispositif de chargement électrique destiné à charger une batterie avec une puissance de charge d'au moins 80 W et un courant de charge d'au moins 2 A, dans lequel le chargeur (1) comporte un boîtier (12) sur lequel se trouvent une connexion d'alimentation et une connexion de charge (11) pour délivrer une énergie électrique de charge avec des paramètres de charge, en particulier le courant de charge et/ou la tension de charge, dans lequel une mémoire, une unité de commande électronique pour régler au moins l'un des paramètres de charge et une interface de communication sont prévues dans le boîtier (12), dans lequel un profil de charge est ou peut être stocké dans la mémoire, lequel profil de charge définit une valeur pour au moins un des paramètres de charge, dans lequel le boîtier (12) a une longueur ne dépassant pas 20 cm, en particulier 17 cm, et une hauteur inférieure à 40 mm, et dans lequel le boîtier (12) avec tous les composants du chargeur (1) qu'il contient a un poids de moins de 500 g,
**caractérisé en ce que**
l'interface de communication est conçue pour la communication sans fil, en particulier comme une interface Bluetooth ou NFC, et que le chargeur (1) est conçu pour recevoir le profil de charge via l'interface de communication et le stocker dans la mémoire, dans lequel en particulier la longueur du boîtier (12) est comprise entre 1,5 fois et 2,7 fois la largeur du boîtier (12) et/ou le produit de la longueur par la largeur du boîtier est une valeur inférieure à 250 cm², en particulier inférieure à 200 cm², en particulier inférieure à 150 cm².

2. Chargeur (1) selon la revendication 1,
**caractérisé en ce que**
le boîtier (12) est un boîtier en plastique et qu'une circulation d'air passive est prévue exclusivement dans le boîtier (12).

3. Chargeur (1) selon l'une quelconque des revendications précédentes,
**caractérisé en ce que**
le chargeur (1) comprend un circuit convertisseur avec une bobine primaire (110) et une bobine secondaire (120), dans lequel le circuit convertisseur comprend un diviseur de tension avec deux bras diviseurs de tension parallèles, lequel convertisseur de tension est connecté en aval d'un premier composant de commutation actif (101), dans lequel la bobine primaire (110) et un condensateur de stockage (104) connecté en série avec la bobine primaire (110) sont prévus dans un premier des bras du diviseur de tension et un deuxième composant de commutation actif (102) est prévu dans un deuxième des bras du diviseur de tension, dans lequel l'unité de commande est conçue pour commander les composants de commutation actifs (101) avec un rapport cyclique et une fréquence de fonctionnement, dans lequel en particulier un redresseur unidirectionnel est prévu entre la bobine secondaire (120) et la connexion de charge (11).

4. Chargeur (1) selon la revendication 3,
**caractérisé en ce que**
l'unité de commande est conçue pour modifier les cycles de travail afin d'ajuster la tension de charge émise à la connexion de charge (11) entre une tension minimale et une tension maximale qui est au moins trois fois supérieure à la tension minimale, et
pour modifier la fréquence de fonctionnement afin de contrôler le courant de charge.

5. Chargeur (1) selon l'une quelconque des revendications précédentes,
**caractérisé en ce que**
l'unité de commande possède une interface de codage par laquelle au moins un des paramètres de charge peut être défini par codage de l'unité de commande, en particulier en fonction du profil de charge, une valeur maximale pour le courant de charge, une valeur nominale pour la tension de charge et/ou une sortie de tension auxiliaire au niveau de la connexion de charge pouvant notamment être fixée par l'intermédiaire de l'interface de codage.

6. Chargeur (1) selon la revendication 5,
**caractérisé en ce que**
la connexion de charge (11) comprend un dispositif de codage connecté à l'interface de codage de l'unité de commande, lequel dispositif de codage peut être connecté de manière amovible, en particulier par une connexion câblée, à un dispositif de codage correspondant qui est fourni sur la batterie ou sur un câble de charge (2, 201, 202, 203) afin d'établir un état de fonctionnement du dispositif de chargement, dans lequel, dans l'état de fonctionnement, le codage de l'unité de commande est défini par des paramètres de codage spécifiés par le dispositif de codage, dans lequel, en particulier, les paramètres de codage définis dans le dispositif de codage peuvent être lus directement à partir du dispositif de codage par l'unité de commande via le dispositif de codage dans l'état de fonctionnement dans lequel le chargeur (1) est connecté à la batterie pour charger la batterie.

7. Chargeur (1) selon l'une des revendications 5 à 6, **caractérisé en ce que**
l'unité de commande est conçue pour fixer le courant de charge en fonction du codage, l'unité de commande étant notamment conçue pour fixer un courant de charge d'au moins 3 A, en particulier d'au moins 4 A, lors d'un premier codage de l'unité de commande,
et/ou que
l'unité de commande est conçue pour fixer la tension de charge en fonction du codage, l'unité de commande étant notamment conçue pour fixer une tension de charge d'une tension nominale d'au moins 48 V lors d'un deuxième codage de l'unité de commande et en particulier pour fixer une tension de charge d'une tension nominale d'au plus 6 V lors d'un troisième codage de l'unité de commande.

8. Chargeur (1) selon l'une quelconque des revendications 5 à 7,
**caractérisé en ce que**
l'unité de commande est conçue pour fixer le paramètre de charge en fonction du codage de telle sorte que le paramètre de charge soit limité à une valeur limite maximale spécifiée en fonction du codage.

9. Dispositif de chargement comprenant un chargeur (1) selon l'une des revendications précédentes 6 à 8,
**caractérisé en ce que**
le dispositif de chargement comprend une pluralité de câbles de charge différents (2, 201, 202, 203), chacun ayant une première connexion (22, 221, 222, 223), avec laquelle il peut être connecté ou est connecté à une batterie associée au câble de charge (2, 201, 202, 203), et une deuxième connexion (21, 211, 212, 213), qui est conçue pour correspondre à la connexion de charge (11) et peut être connectée de manière amovible à la connexion de charge (11) afin d'établir l'état de fonctionnement du dispositif de chargement, dans lequel la deuxième connexion (21, 211, 212, 213) de chaque câble de charge (2, 201, 202, 203) possède respectivement un moyen de codage du câble de charge (2, 201, 202, 203) correspondant au dispositif de codage de telle sorte qu'à l'état de fonctionnement, le moyen de codage du câble de charge (2, 201, 202, 203) est connecté au dispositif de codage, l'unité de commande étant conçue, pour le codage, pour identifier le moyen de codage du câble de charge (2, 201, 202, 203) connecté au dispositif de codage à l'état de fonctionnement et à fixer au moins un des paramètres de charge à la fois en fonction du moyen de codage identifié du câble de charge (2, 201, 202, 203) et en fonction de la valeur du courant de charge et/ou de la tension de charge définie par le profil de charge.

10. Dispositif de chargement selon la revendication 9,
**caractérisé en ce que**
le moyen de codage et le dispositif de codage sont reliés l'un à l'autre dans l'état de fonctionnement par un contact électrique du moyen de codage relié à un contact électrique du dispositif de codage au moyen d'une connexion électriquement conductrice, l'unité de commande étant conçue pour identifier la connexion électriquement conductrice au moyen d'une mesure du courant et/ou de la tension et pour fixer le paramètre de charge en fonction de la connexion identifiée.

11. Dispositif de chargement selon l'une quelconque des revendications 9 à 10,
**caractérisé en ce que**
le moyen de codage et le dispositif de codage sont reliés l'un à l'autre à l'état de fonctionnement par une interface de données, l'unité de commande étant conçue pour lire les valeurs spécifiées pour au moins un des paramètres de charge par l'intermédiaire de ladite interface de données.

12. Dispositif de chargement selon l'une quelconque des revendications 9 à 11,
**caractérisé en ce que**
les paramètres de codage sont stockés de manière modifiable dans le dispositif de codage, dans lequel le dispositif de codage possède une interface de programmation, en particulier une interface de programmation NFC, par laquelle les paramètres de codage stockés dans le dispositif de codage peuvent être fixés dans le dispositif de codage.

13. Dispositif de chargement selon la revendication 12,
**caractérisé en ce que**
le dispositif de codage est conçu pour permettre le stockage des paramètres de codage via l'interface de programmation dans un état hors tension.

14. Dispositif de chargement selon l'une quelconque des revendications 9 à 13,
**caractérisé en ce que**
l'unité de commande est conçue pour identifier au moins quatre moyens de codage différents et pour définir un groupe de paramètres de charge attribué au moyen de codage respectivement identifié en fonction du moyen de codage respectivement identifiée, les groupes de paramètres de charge attribués aux quatre moyens de codage différents différant respectivement les uns des autres par au moins l'un de leurs paramètres de charge.

15. Procédé de chargement d'une batterie, dans lequel une batterie est connectée à une connexion de chargement (11) d'un chargeur (1) selon l'une quelconque des revendications 1 à 8 au moyen d'un câble de chargement (2, 201, 202, 203) et un profil de chargement pour le chargement de la batterie est spécifié,
**caractérisé en ce que**
le profil de charge est défini dans le chargeur (1) par l'intermédiaire d'un terminal mobile, en particulier le terminal mobile ayant une interface d'entrée par laquelle une vitesse de charge souhaitée est spécifiée par un utilisateur, et un profil de charge est automatiquement sélectionné par le terminal mobile en fonction de la vitesse de charge souhaitée et ce profil de charge sélectionné est ensuite défini dans le chargeur (1).

16. Procédé selon la revendication 15,
**caractérisé en ce que**
le codage de l'unité de commande est effectué par l'intermédiaire de la connexion de charge (11), codage qui permet de fixer au moins l'un des paramètres de charge.

17. Procédé selon la revendication 16,
**caractérisé en ce que**
lorsque le câble de charge (2, 201, 202, 203) est connecté au chargeur (1), un moyen de codage du câble de charge (2, 201, 202, 203) est nécessairement connecté à un dispositif de codage du chargeur (1), le moyen de codage connecté au dispositif de codage étant identifié et au moins un des paramètres de charge étant fixé à la fois en fonction d'un profil de charge défini dans le chargeur (1) et en fonction du dispositif de codage identifié.
